# EUROPÄISCHE PATENTANMELDUNG

(11) **EP 4 209 814 A1**
(43) Veröffentlichungstag der Anmeldung: **12.07.2023**
(21) Anmeldenummer: 22211570.1
(22) Anmeldetag: 20.10.2016
(51) Int. Cl.: G02B 6/44

(54) **RANGIERFELDVORRICHTUNG UND BAUKASTENSYSTEM ZUR HERSTELLUNG EINER RANGIERFELDVORRICHTUNG**

(30) Priorität: 27.10.2015 DE 102015118338
(62) Teilanmeldung aus: 16784893.6
(71) Anmelder: Reichle & De-Massari AG, 8620 Wetzikon (CH)
(72) Erfinder: Franzke, Jörg, 8623 Wetzikon (CH); Lendi, Christian, 8625 Gossau (CH); Georgiev, Kaloyan, 5800 Pleven (BG); Zidarova, Nadejda, 1111 Sofia (BG)
(74) Vertreter: Daub, Thomas

(57) **Zusammenfassung**

Die Erfindung betrifft eine Rangierfeldvorrichtung, insbesondere für Lichtwellenleiterkabel, mit zumindest einer Verbindungseinheit (10a; 10b), welche zumindest einen Port definiert, wobei die Verbindungseinheit (10a; 10b) in zumindest einem Verbindungsbereich (14a; 14b) eine Portdichte von zumindest 0,55 Ports/cm² aufweist, wobei die Verbindungseinheit (10a; 10b) zumindest ein Verbindungsmodul (18a, 19a; 18b, 19b), welches den zumindest einen Port bereitstellt, und zumindest eine rückseitige Kabelmanagereinheit (26a; 26b) aufweist, welche dazu vorgesehen ist, in zumindest einem Betriebszustand zumindest ein Kabel (12a) dem Verbindungsmodul (18a, 19a; 18b, 19b) zuzuführen.

## Beschreibung

### Stand der Technik

Die Erfindung geht aus von einer Rangierfeldvorrichtung nach dem Oberbegriff des Anspruchs 1 und von einem Baukastensystem zur Herstellung einer Rangierfeldvorrichtung gemäß Anspruch 19.

Aus dem Stand der Technik sind Rangierfelder für Lichtwellenleiterkabel bekannt, welche zumindest eine als 19-Zoll-Einschub ausgebildete Verbindungseinheit zur Verbindung mit einem Standard 19-Zoll-Rack umfassen, wobei die Verbindungseinheit an einer Frontseite einen Verbindungsbereich mit einer Portdichte von 72 Ports/U (Höheneinheit) aufweist. Dabei ist jeder Port in der Regel zur Aufnahme eines standardisierten und/oder genormten Einbausteckverbinderelements vorgesehen, welches zur Verbindung von zwei Simplex-Steckverbinderelementen, einem Duplex-Steckverbinderelement und/oder einem MPO-Steckverbinderelement vorgesehen ist.

Die Aufgabe der Erfindung besteht insbesondere darin, eine gattungsgemäße Rangierfeldvorrichtung mit verbesserten Eigenschaften hinsichtlich einer Effizienz bereitzustellen. Die Aufgabe wird durch die kennzeichnenden Merkmale des Patentanspruchs 1 und durch die Merkmale des Patentanspruchs 19 gelöst, während vorteilhafte Ausgestaltungen und Weiterbildungen der Erfindung den Unteransprüchen entnommen werden können.

### Vorteile der Erfindung

Die Erfindung betrifft eine Rangierfeldvorrichtung, insbesondere für Lichtwellenleiterkabel, mit zumindest einer Verbindungseinheit, welche zumindest einen Port und vorteilhaft eine Vielzahl von Ports definiert und insbesondere bereitstellt, wobei die Verbindungseinheit in zumindest einem Verbindungsbereich, insbesondere Flächenbereich, eine Portdichte von zumindest 0,55 Ports/cm², vorteilhaft von zumindest 0,56 Ports/cm² und besonders bevorzugt von zumindest 0,57 Ports/cm² aufweist.

Unter einer "Rangierfeldvorrichtung" soll in diesem Zusammenhang insbesondere zumindest ein Teil, insbesondere eine Unterbaugruppe, eines Rangierfelds verstanden werden. Insbesondere kann die Rangierfeldvorrichtung auch das gesamte Rangierfeld umfassen. Insbesondere kann die Rangierfeldvorrichtung dabei auch zumindest ein Kabel, vorzugsweise Lichtwellenleiterkabel, insbesondere zur Verbindung mit der Verbindungseinheit, und/oder zumindest eine Trägereinheit, welche insbesondere zumindest mittelbar und/oder unmittelbar zur Befestigung der Verbindungseinheit vorgesehen sein kann, aufweisen.

In diesem Zusammenhang soll unter einer "Verbindungseinheit" insbesondere eine, vorteilhaft zumindest teilweise und vorzugsweise zu wenigstens einem Großteil als Kabelmanagementeinheit ausgebildete, Einheit verstanden werden, welche insbesondere in zumindest einem Betriebszustand zumindest zu einer Handhabung, insbesondere einer Führung, einer Verbindung, einer Kopplung und/oder einer Verteilung, von Kabeln, vorteilhaft einer Vielzahl von Kabeln, vorzugsweise Lichtwellenleiterkabeln, vorgesehen ist. Insbesondere umfasst die Verbindungseinheit dabei zumindest eine, vorteilhaft genau eine, bevorzugt an der Trägereinheit befestigbare, Rahmeneinheit, insbesondere ein Chassis und/oder ein Außengehäuse, welche/welches dazu vorgesehen ist, den Verbindungsbereich zumindest teilweise zu begrenzen. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner soll unter einem "Port" insbesondere ein standardisierter und/oder genormter Bereich, insbesondere Aufnahmebereich, verstanden werden, welcher insbesondere dazu vorgesehen ist, in zumindest einem Betriebszustand, insbesondere wahlweise, zumindest ein, vorteilhaft genau ein, insbesondere standardisiertes und/oder genormtes, Einbausteckverbinderelement, insbesondere für einen geräteseitigen Anschluss, und/oder zumindest einen Teil einer, insbesondere von einem Einbausteckverbinderelement verschieden ausgebildeten, insbesondere standardisierten und/oder genormten, Funktionseinheit, vorteilhaft Funktionsüberwachungseinheit, insbesondere zur Überwachung einer korrekten Funktion eines mit einem weiteren Einbausteckverbinderelement verbundenen Kabels, aufzunehmen. Das Einbausteckverbinderelement ist dabei insbesondere zur Verbindung von zumindest einem Simplex-Steckverbinderelement und/oder von zwei Simplex-Steckverbinderelementen, vorteilhaft LC-Simplex-Steckverbinderelementen, einem Duplex-Steckverbinderelement, vorteilhaft einem LC-Duplex-Steckverbinderelement, und/oder einem Mehrfaser-Steckverbinderelement, vorteilhaft einem MPO-Steckverbinderelement, vorgesehen. Unter einem "standardisieren und/oder genormten" Objekt soll in diesem Zusammenhang insbesondere ein Objekt verstanden werden, welches genormte Maße, insbesondere Außenmaße, aufweist und sich insbesondere lediglich in einem inneren Aufbau und/oder in einer Funktionsweise von einem weiteren standardisieren und/oder genormten Objekt unterscheidet. Darüber hinaus soll unter einer "Portdichte" insbesondere eine Anzahl von, insbesondere standardisierten und/oder genormten, Ports, insbesondere der Verbindungseinheit, pro festlegbarer und/oder festgelegter Fläche, vorteilhaft Oberfläche, verstanden werden. Insbesondere entspricht die Portdichte somit einer Flächendichte und vorteilhaft einer Oberflächendichte. Besonders bevorzugt entspricht die Portdichte eine Anzahl von Ports, welche von einem Benutzer und/oder Bediener bei Betrachtung von außerhalb der Verbindungseinheit, insbesondere bei einer Betrachtung einer Frontseite der Verbindungseinheit, sichtbar sind. Durch diese Ausgestaltung kann eine gattungsgemäße Rangierfeldvorrichtung mit verbesserten Eigenschaften hinsichtlich einer Effizienz, insbesondere einer Bauraumeffizienz, einer Leistungseffizienz, einer Bauteileffizienz und/oder einer Kosteneffizienz, bereitgestellt werden. Zudem kann eine vorteilhaft flexibel einsetzbare und/oder anpassbare Rangierfeldvorrichtung bereitgestellt werden.

Die Verbindungseinheit könnte dabei beispielsweise als 10-Zoll-Einschub, als 21-Zoll-Einschub, als 24-Zoll-Einschub und/oder als beliebiger anderer Einschub, insbesondere zur Verbindung mit einem, insbesondere Standard, 10-Zoll-Rack, 21-Zoll-Rack, 24-Zoll-Rack und/oder beliebigen anderen Rack ausgebildet sein. Vorteilhaft wird jedoch vorgeschlagen, dass die Verbindungseinheit als 19-Zoll-Einschub, insbesondere zur Verbindung mit einem, insbesondere Standard, 19-Zoll-Rack, ausgebildet ist und der Verbindungsbereich eine Portdichte von zumindest 110 Ports/U, vorteilhaft zumindest 112 Ports/U, vorzugsweise zumindest 114 Ports/U, besonders bevorzugt zumindest 116 Ports/U und besonders vorteilhaft zumindest 118 Ports/U aufweist. Ein "U" entspricht dabei insbesondere einer Höheneinheit (HE) und/oder 44,45 mm. Hierdurch kann insbesondere eine besonders bauraumeffiziente Rangierfeldvorrichtung und/oder ein Rechenzentrum mit einer besonders hohen Portdichte erreicht werden.

Ist der Verbindungsbereich an einer Frontseite der Verbindungseinheit angeordnet, insbesondere in einem montierten Zustand der Verbindungseinheit, insbesondere bezogen auf eine vorgesehene Einbaulage, kann insbesondere eine besonders einfache Zugänglichkeit erreicht werden.

Ferner wird vorgeschlagen, dass die Verbindungseinheit modular aufgebaut ist. Unter der Wendung "modular aufgebaut" soll dabei insbesondere verstanden werden, dass die Verbindungseinheit selbst und/oder zumindest ein Bauteil der Verbindungseinheit modular aufgebaut und/oder zusammenbaubar ausgebildet ist. Insbesondere ist dabei zumindest ein Bauteil der Verbindungseinheit durch zumindest ein weiteres Bauteil, vorteilhaft desselben Typs, austauschbar. Unter "Objekten desselben Typs" sollen in diesem Zusammenhang insbesondere Objekte, vorteilhaft derselben Bauart, verstanden werden, die sich insbesondere in ihrer Funktionsweise, ihrem inneren Aufbau und/oder ihren Maßen, insbesondere einer Materialstärke, einer Breite und/oder einer Höhe, zumindest teilweise unterscheiden. Besonders bevorzugt ist die Verbindungseinheit dabei, insbesondere in eine Breite, insbesondere im montierten Zustand der Verbindungseinheit, insbesondere bezogen auf die vorgesehene Einbaulage, und/oder vorteilhaft in eine Höhe, insbesondere im montierten Zustand der Verbindungseinheit, insbesondere bezogen auf die vorgesehene Einbaulage, beliebig erweiterbar und/oder reduzierbar. Hierdurch kann insbesondere eine besonders flexible Rangierfeldvorrichtung bereitgestellt werden. Zudem kann eine vorteilhafte Erweiterbarkeit, insbesondere bestehender Rechenzentren, erreicht werden.

In einer Ausgestaltung der Erfindung wird vorgeschlagen, dass die Verbindungseinheit zumindest eine, insbesondere genau eine, modular aufgebaute Rahmeneinheit, insbesondere die bereits zuvor genannte Rahmeneinheit, aufweist, wodurch die Verbindungseinheit insbesondere auf besonders einfache Art in einer Breite und/oder vorteilhaft in einer Höhe erweiterbar und/oder reduzierbar ist. Besonders vorteilhaft weist die Rahmeneinheit dabei zumindest zwei zumindest im Wesentlichen identisch zueinander ausgebildete Deckplatten und zumindest zwei zumindest im Wesentlichen identisch zueinander ausgebildete Seitenwände auf, welche vorteilhaft abhängig von einer Breite und/oder Höhe der Rahmeneinheit und/oder der Verbindungseinheit aus einer Gruppe von Deckplatten und/oder Seitenwänden auswählbar sind. Unter der Wendung "zumindest im Wesentlichen identisch" soll dabei insbesondere, abgesehen von Fertigungstoleranzen und/oder im Rahmen fertigungstechnischer Möglichkeiten und/oder im Rahmen standardisierter Toleranzen, identisch verstanden werden.

Die Verbindungseinheit weist zumindest ein Verbindungsmodul auf, welches den zumindest einen Port bereitstellt. Unter einem "Verbindungsmodul" soll in diesem Zusammenhang insbesondere eine, insbesondere in einem Aufnahmebereich der Rahmeneinheit angeordnete, insbesondere zusammenhängende und/oder verbundene, Baugruppe verstanden werden, welche insbesondere genau ein Modulgehäuse aufweist. Insbesondere ist der zumindest eine Port dabei auf einer, insbesondere der Frontseite der Verbindungseinheit zugewandten, Seite, insbesondere Frontseite, des Verbindungsmoduls angeordnet. Bevorzugt weist das Verbindungsmodul frontseitige und rückseitige Anschlussmöglichkeiten, insbesondere in einem montierten Zustand der Verbindungseinheit, insbesondere bezogen auf eine vorgesehene Einbaulage, auf. Besonders bevorzugt umfasst die Verbindungseinheit eine Mehrzahl von Verbindungsmodulen, insbesondere zumindest im Wesentlichen baugleichen Verbindungsmodulen und/oder Verbindungsmodulen desselben Typs, insbesondere zumindest zwei, zumindest drei, zumindest vier und/oder zumindest fünf, vorteilhaft nebeneinander angeordnete, Verbindungsmodule, insbesondere bezogen auf die Breite der Verbindungseinheit. Unter "zumindest im Wesentlichen baugleichen" Objekten sollen dabei insbesondere Objekte verstanden werden, welche zumindest im Wesentlichen identisch zueinander ausgebildete Außenformen aufweisen, sich jedoch insbesondere in zumindest einem Merkmal, vorteilhaft einem inneren Aufbau, wie beispielsweise einem Einbausteckverbinderelementtyp, unterscheiden können. Hierdurch kann insbesondere eine besonders einfache Bereitstellung von Ports erreicht werden.

Das Verbindungsmodul könnte beispielsweise zumindest 6 Ports oder genau 6 Ports bereitstellen. Vorteilhaft wird jedoch vorgeschlagen, dass das Verbindungsmodul zumindest 9 Ports, vorzugsweise zumindest 12 Ports, besonders bevorzugt zumindest 15 Ports und besonders vorteilhaft zumindest 18 Ports, insbesondere in zumindest einer Reihe, vorteilhaft in zumindest zwei Reihen und besonders vorteilhaft in zumindest drei Reihen, bereitstellt. Vorzugsweise stellt das Verbindungsmodul dabei höchstens 36 Ports, insbesondere höchstens 33 Ports, vorteilhaft höchstens 30 Ports, besonders bevorzugt höchstens 27 Ports und besonders vorteilhaft höchstens 24 Ports bereit, insbesondere in zumindest einer Reihe, vorteilhaft in zumindest zwei Reihen und besonders vorteilhaft in zumindest drei Reihen. Besonders vorteilhaft stellt das Verbindungsmodul genau 18 Ports bereit, insbesondere in genau drei Reihen und somit insbesondere 6 Ports pro Reihe. Hierdurch kann insbesondere ein vorteilhaft flexibles und gleichzeitig besonders effizientes, insbesondere bauraumeffizientes und/oder kosteneffizientes, Verbindungsmodul bereitgestellt werden.

In einer bevorzugten Ausgestaltung der Erfindung wird vorgeschlagen, dass das Verbindungsmodul eine Höhe, insbesondere bezogen auf eine Höhe der Verbindungseinheit, insbesondere bezogen auf eine vorgesehene Einbaulage, von zumindest 1,78 cm, insbesondere zumindest 0,40 U, und/oder höchstens 3,56 cm, insbesondere höchstens 0,80.U, aufweist. Besonders vorteilhaft weist das Verbindungsmodul eine Höhe von zumindest im Wesentlichen, insbesondere abgesehen von Toleranzen genau, 3,33 cm und/oder zumindest im Wesentlichen, insbesondere abgesehen von Toleranzen genau, 0,75.U auf. Hierdurch kann insbesondere eine besonders platzsparende Anordnung erreicht werden. Zudem kann insbesondere ein bereitgestellter Bauraum insbesondere bei einer wirtschaftlich besonders relevanten Verbindungseinheit mit einer Höhe von 3.U effektiv genutzt werden.

Ferner wird vorgeschlagen, dass das Verbindungsmodul eine Breite, insbesondere bezogen auf eine Breite der Verbindungseinheit, von höchstens 10 cm und vorteilhaft von höchstens 9 cm aufweist und/oder eine Breite von höchstens einem Viertel und vorteilhaft von höchstens einem Fünftel der Breite der Verbindungseinheit aufweist. Hierdurch kann insbesondere eine Bauraumeffizienz weiter verbessert werden.

Ferner wird vorgeschlagen, dass das Verbindungsmodul einzeln und unabhängig von weiteren Verbindungsmodulen, insbesondere der Verbindungseinheit, lösbar, verbindbar und/oder austauschbar ist, insbesondere bezüglich der Rahmeneinheit. Hierdurch kann insbesondere ein besonders flexibler Austausch von Verbindungsmodulen erreicht werden.

Eine besonders hohe Flexibilität und/oder Erweiterbarkeit kann insbesondere dann erreicht werden, wenn das Verbindungsmodul modular aufgebaut ist.

In einer Ausgestaltung der Erfindung wird vorgeschlagen, dass die Verbindungseinheit zumindest einen, insbesondere relativ zu der Rahmeneinheit beweglichen und/oder beweglich gelagerten, insbesondere schwenkbar und/oder vorteilhaft linear beweglichen, Modulhalter aufweist, welcher von wenigstens einer Aufbewahrungsposition in wenigstens eine Bearbeitungsposition und umgekehrt bewegbar, vorteilhaft linear bewegbar, und dazu vorgesehen ist, das Verbindungsmodul, insbesondere bewegungsfest, aufzunehmen. Vorzugsweise weist der Modulhalter dabei zumindest eine, vorteilhaft genau eine, Lagerplatte und/oder zumindest eine Lagerwand, vorteilhaft mehrere Lagerwände, auf, welche insbesondere zumindest einen Modulaufnahmebereich, insbesondere zur Aufnahme des Verbindungsmoduls, zumindest teilweise begrenzen. Vorteilhaft ist eine Kontur und/oder Form des Modulhalters dabei zumindest teilweise an eine Form und/oder Kontur der Rahmeneinheit angepasst. Besonders vorteilhaft ist der Modulhalter dazu vorgesehen, mehrere Verbindungsmodule, insbesondere zumindest zwei, zumindest drei, zumindest vier und/oder zumindest fünf, vorteilhaft genau fünf, Verbindungsmodule, insbesondere gleichzeitig, vorteilhaft nebeneinander, insbesondere bezogen auf eine Breite der Verbindungseinheit, aufzunehmen. Vorzugsweise sind die Verbindungsmodule dabei jeweils durch zumindest eine Lagerwand getrennt. Unter dem Ausdruck "bewegungsfest" soll dabei insbesondere verstanden werden, dass eine Bewegung des Modulhalters zu einer gleichzeitigen und vorteilhaft gleichförmigen Bewegung des in dem Modulhalter angeordneten Verbindungsmoduls führt. Unter einer "Aufbewahrungsposition" soll ferner insbesondere eine Position verstanden werden, in welcher das, insbesondere in dem Modulhalter angeordnete, Verbindungsmodul, insbesondere zumindest der Port, nicht, lediglich teilweise und/oder schwer zugänglich ist, insbesondere ohne zumindest ein weiteres, insbesondere in dem Modulhalter angeordnetes, Verbindungsmodul zu beeinflussen. Unter einer "Bearbeitungsposition" soll insbesondere eine Position verstanden werden, in welcher das, insbesondere in dem Modulhalter angeordnete, Verbindungsmodul, insbesondere der Port, leicht zugänglich ist und/oder unabhängig von zumindest einem weiteren, insbesondere in dem Modulhalter angeordneten, Verbindungsmodul, zugänglich ist. Hierdurch kann insbesondere eine vorteilhafte Bearbeitung eines Verbindungsmoduls und/oder eine vorteilhaft unabhängige Änderung von Kabelkonfigurationen erreicht werden.

Darüber hinaus wird vorgeschlagen, dass das Verbindungsmodul zu einer Montage zumindest rückseitig in den Modulhalter, insbesondere den Modulaufnahmebereich, vorteilhaft mittels einer linearen Bewegung, einführbar und/oder zu einer Demontage zumindest rückseitig aus dem Modulhalter, insbesondere dem Modulaufnahmebereich, vorteilhaft mittels einer linearen Bewegung, entfernbar ist. Bevorzugt ist das Verbindungsmodul dabei zur Montage, insbesondere wahlweise, frontseitig und/oder rückseitig in den Modulhalter, insbesondere den Modulaufnahmebereich, vorteilhaft mittels einer linearen Bewegung, einführbar und/oder zur Demontage, insbesondere wahlweise, frontseitig und/oder rückseitig aus dem Modulhalter, insbesondere dem Modulaufnahmebereich, vorteilhaft mittels einer linearen Bewegung, entfernbar. Hierdurch kann insbesondere eine besonders flexible Montage und/oder Demontage eines Verbindungsmoduls erreicht werden.

In einer bevorzugten Ausgestaltung der Erfindung wird vorgeschlagen, dass die Verbindungseinheit zumindest ein, vorteilhaft genau ein, Schutzelement aufweist, welches dazu vorgesehen ist, in zumindest einem Betriebszustand, insbesondere einem Schutzbetriebszustand, den Verbindungsbereich zumindest teilweise und vorzugsweise zu wenigstens einem Großteil abzudecken, insbesondere zumindest bei einer Betrachtung senkrecht zum Verbindungsbereich und/oder zur Frontseite der Verbindungseinheit, und insbesondere vor Berührungen zu schützen. Insbesondere ist das Schutzelement im Bereich der Frontseite der Verbindungseinheit angeordnet. Vorteilhaft ist das Schutzelement dabei relativ zur Rahmeneinheit schwenkbar um eine Schwenkachse, welche sich insbesondere in Richtung der Breite der Verbindungseinheit erstreckt, gelagert. Besonders bevorzugt umfasst das Schutzelement zumindest einen, insbesondere transluzenten und/oder vorteilhaft transparenten, Sichtbereich, welcher insbesondere dazu vorgesehen ist, eine Sicht zumindest auf einen Teil des Verbindungsbereichs und/oder den gesamten Verbindungsbereich zu ermöglichen, insbesondere ohne das Schutzelement entfernen zu müssen. Hierdurch kann insbesondere eine Schutzeffizienz verbessert werden, wodurch vorteilhaft eine unbeabsichtigte Berührung von in Einbausteckverbinderelementen angeordneten Steckverbinderelementen vermieden werden kann.

In einer bevorzugten Ausgestaltung der Erfindung wird vorgeschlagen, dass die Verbindungseinheit zumindest ein Schutzelement, insbesondere das bereits zuvor genannte Schutzelement, aufweist, welches dazu vorgesehen ist, in zumindest einem Betriebszustand den Verbindungsbereich zumindest teilweise abzudecken, und welches mit dem Modulhalter verbunden ist. Insbesondere ist das Schutzelement dabei zusammen mit dem Modulhalter, insbesondere gleichförmig und/oder gleichzeitig, bewegbar. Das Schutzelement könnte dabei zumindest teilweise einstückig mit dem Modulhalter verbunden sein. Vorteilhaft ist das Schutzelement jedoch mit dem Modulhalter koppelbar und/oder an dem Modulhalter befestigbar ausgebildet. Vorteilhaft weist das Schutzelement dabei zumindest einen Magnetverschluss auf, welcher insbesondere dazu vorgesehen ist, das Schutzelement in dem Schutzbetriebszustand zu halten und/oder zu fixieren, insbesondere derart, dass der Verbindungsbereich zumindest teilweise abgedeckt und vorteilhaft zu wenigstens einem Großteil abgedeckt ist. Darunter, dass ein Objekt mit einem weiteren Objekt "zumindest teilweise einstückig verbunden" ist soll in diesem Zusammenhang insbesondere verstanden werden, dass zumindest ein Bauteil des Objekts und/oder das Objekt einstückig mit zumindest einem Bauteil des weiteren Objekts und/oder dem weiteren Objekt verbunden ist. Unter "einstückig" soll in diesem Zusammenhang insbesondere zumindest stoffschlüssig verbunden verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren, insbesondere einem Ein- und/oder Mehrkomponenten-Extrusionsverfahren, und/oder einem Spritzgussverfahren, insbesondere einem Ein- und/oder Mehrkomponenten-Spritzgussverfahren, hergestellt. Hierdurch kann insbesondere eine vorteilhaft flexible Schutzwirkung, insbesondere in der Aufbewahrungsposition und der Bearbeitungsposition, erreicht werden.

Vorteilhaft weist die Verbindungseinheit zumindest eine frontseitige Kabelmanagereinheit auf, welche dazu vorgesehen ist, in zumindest einem Betriebszustand zumindest ein Kabel, vorteilhaft eine Vielzahl von Kabeln, vorteilhaft Lichtwellenleiterkabel, dem Verbindungsbereich zuzuführen. Unter einer "frontseitigen Kabelmanagereinheit" soll dabei insbesondere eine, insbesondere mit der Verbindungseinheit, vorteilhaft der Frontseite der Verbindungseinheit, in Verbindung stehende und vorteilhaft im Bereich der Frontseite der Verbindungseinheit angeordnete, Einheit verstanden werden, welche insbesondere dazu vorgesehen ist, das zumindest eine Kabel, vorteilhaft eine Vielzahl von Kabeln, zumindest teilweise zu führen und/oder zu halten. Hierdurch kann insbesondere eine besonders effiziente und/oder flexible Kabelführung erreicht werden. Zudem können mögliche maximale Biegeradien der Kabel vorteilhaft eingehalten werden.

Weist die Verbindungseinheit zumindest eine frontseitige Kabelmanagereinheit, insbesondere die bereits zuvor genannte frontseitige Kabelmanagereinheit, auf, welche dazu vorgesehen ist, in zumindest einem Betriebszustand zumindest ein Kabel dem Verbindungsbereich zuzuführen, und welche mit dem Modulhalter verbunden ist, kann insbesondere eine gleichbleibende Kabelführung erreicht werden, wobei vorteilhaft eine Bewegung von in Einbausteckverbinderelementen angeordneten Steckverbinderelementen vermieden werden kann. Insbesondere ist die frontseitige Kabelmanagereinheit dabei zusammen mit dem Modulhalter, insbesondere gleichförmig und/oder gleichzeitig, bewegbar. Die frontseitige Kabelmanagereinheit könnte dabei zumindest teilweise einstückig mit dem Modulhalter verbunden sein. Vorteilhaft ist die frontseitige Kabelmanagereinheit jedoch zumindest mit dem Modulhalter koppelbar und/oder an dem Modulhalter befestigbar ausgebildet.

Die Verbindungseinheit weist zumindest eine, insbesondere relativ zu dem Modulhalter statische und/oder unbewegliche, vorteilhaft an der Rahmeneinheit fixierte, rückseitige Kabelmanagereinheit auf, welche dazu vorgesehen ist, in zumindest einem Betriebszustand zumindest ein Kabel, vorteilhaft eine Vielzahl von Kabeln, vorteilhaft Lichtwellenleiterkabel, dem Verbindungsmodul zuzuführen, insbesondere einem rückseitigen Bereich des Verbindungsmoduls und/oder einer der Frontseite der Verbindungseinheit abgewandten Seite des Verbindungsmoduls. Unter einer "rückseitigen Kabelmanagereinheit" soll dabei insbesondere eine, insbesondere mit der Verbindungseinheit, vorteilhaft einer, insbesondere der Frontseite der Verbindungseinheit gegenüberliegenden, Rückseite, der Verbindungseinheit, in Verbindung stehende und vorteilhaft im Bereich der Rückseite der Verbindungseinheit angeordnete, Einheit verstanden werden, welche insbesondere dazu vorgesehen ist, das zumindest eine Kabel, vorteilhaft eine Vielzahl von Kabeln, zumindest teilweise zu führen und/oder zu halten. Vorteilhaft weist die rückseitige Kabelmanagereinheit dabei zumindest einen Kabelaufteiler und/oder zumindest ein Zugentlastungselement, insbesondere zur Zugentlastung des zumindest einen Kabels, auf. Hierdurch kann insbesondere eine besonders effiziente und/oder flexible Kabelführung erreicht werden.

Ist die rückseitige Kabelmanagereinheit modular aufgebaut, kann insbesondere eine Flexibilität der Rangierfeldvorrichtung weiter verbessert werden.

Eine besonders einfache und/oder effiziente Montage und/oder Demontage kann insbesondere dann erreicht werden, wenn die rückseitige Kabelmanagereinheit zu einer, insbesondere rückseitigen, Montage und/oder Demontage des Verbindungsmoduls, insbesondere in dem Modulhalter, insbesondere dem Modulaufnahmebereich, mit dem Verbindungsmodul koppelbar ist. Vorzugsweise umfasst die rückseitige Kabelmanagereinheit und/oder das Verbindungsmodul dazu zumindest ein, vorteilhaft als Hakenelement, Hakenaufnahme, Bolzenelement und/oder Bolzenaufnahme ausgebildetes, Koppelelement. Insbesondere ist auch denkbar, dass zu einer, insbesondere rückseitigen, Montage und/oder Demontage mehrere Verbindungsmodule mit der rückseitigen Kabelmanagereinheit und/oder mehrere rückseitige Kabelmanagereinheiten mit dem Verbindungsmodul koppelbar sind.

Definiert die rückseitige Kabelmanagereinheit zumindest einen Kabelüberlängenaufnahmebereich, insbesondere zur Aufnahme einer Kabelüberlänge des zumindest einen Kabels, insbesondere bei einer Bewegung des Modulhalters und/oder des Verbindungsmoduls, insbesondere von der Aufbewahrungsposition in die Bearbeitungsposition und umgekehrt, kann insbesondere eine Bewegung und/oder eine Zugspannung des zumindest einen Kabels vermieden werden.

In einer weiteren Ausgestaltung der Erfindung wird vorgeschlagen, dass die Verbindungseinheit, vorteilhaft zumindest der Modulhalter, zumindest einen Funktionseinheitenaufnahmebereich aufweist, welcher wenigstens einem Verbindungsmodul zugeordnet und/oder mit zumindest einem Verbindungsmodul assoziiert ist, und zur Aufnahme wenigstens einer, vorteilhaft genau einer, von einem Verbindungsmodul, einer frontseitigen Kabelmanagereinheit, einer rückseitigen Kabelmanagereinheit und einem Schutzelement verschiedenen Funktionseinheit vorgesehen ist. Die Funktionseinheit kann dabei als beliebige Funktionseinheit ausgebildet sein, wie beispielsweise als Anzeigeeinheit, insbesondere zur Anzeige zumindest eines Signals der Funktionsüberwachungseinheit, zur Anzeige eines in einem Port angeordneten Typs eines Einbausteckverbinderelements und/oder zur Zuordnung eines in dem Einbausteckverbinderelement angeordneten Steckverbinderelements, als Versorgungseinheit, insbesondere zur Energieversorgung der Funktionsüberwachungseinheit, und/oder als Steuereinheit, insbesondere zur Steuerung der Funktionsüberwachungseinheit. Hierdurch kann insbesondere eine Vielseitigkeit der Rangierfeldvorrichtung verbessert werden. Zudem kann eine Effizienz, insbesondere eine Zeiteffizienz, insbesondere bei einer Zuordnung der Ports, optimiert werden.

Zudem geht die Erfindung aus von einem Baukastensystem zur Herstellung einer Rangierfeldvorrichtung mit zumindest einem Baukasten, welcher ein Baukasten zur Herstellung einer Rahmeneinheit, eines Verbindungsmoduls, eines Modulhalters, einer frontseitigen Kabelmanagereinheit, eines Schutzelements, einer rückseitigen Kabelmanagereinheit und/oder einer dem Verbindungsmodul zugeordneten Funktionseinheiten ist. Unter einem "Baukastensystem" sollen insbesondere ein System aus zumindest einem Baukasten und zumindest einem weiteren Objekt verstanden werden. Unter einem "Baukasten" soll in diesem Zusammenhang insbesondere ein System mit zumindest einer Gruppe von, insbesondere zumindest teilweise und vorzugsweise zu wenigstens einem Großteil baugleichen und/oder vorteilhaft funktionsgleichen, Objekten verstanden werden, aus welcher insbesondere wenigstens ein Objekt, insbesondere abhängig von einer jeweiligen Systemaufgabe, von jeweiligen Systemparametern, von einem bestimmten Zweck und/oder von anderen Objekten, insbesondere des Baukastensystems, auswählbar und/oder selektierbar ist, wobei das Objekt vorteilhaft mit zumindest einem anderen Objekt, insbesondere des Baukastens, und/oder dem zumindest einen weiteren Objekt, insbesondere des Baukastensystems, kombinierbar ist und/oder kombiniert werden kann, wodurch verschiedene Rangierfelder und/oder Rangierfeldvorrichtungen vorteilhaft flexibel herstellbar, insbesondere montierbar und/oder zusammenbaubar, sind. Die zumindest eine Gruppe von Objekten kann dabei insbesondere eine beliebige Anzahl von Objekten umfassen. Hierdurch kann insbesondere eine Effizienz, insbesondere eine Bauraumeffizienz, eine Leistungseffizienz, eine Bauteileffizienz und/oder eine Kosteneffizienz, verbessert und eine vorteilhaft flexibel einsetzbare und/oder anpassbare Rangierfeldvorrichtung bereitgestellt werden.

Zudem geht die Erfindung aus von einem Verfahren zur Herstellung einer Rangierfeldvorrichtung unter Verwendung des zuvor genannten Baukastensystems, wobei aus zumindest zwei Gruppen zumindest ein Objekt ausgewählt wird und zumindest die ausgewählten Objekte anschließend kombiniert werden, wodurch insbesondere verschiedene Rangierfelder und/oder Rangierfeldvorrichtungen vorteilhaft flexibel hergestellt werden können.

Die Rangierfeldvorrichtung und/oder das Baukastensystem zur Herstellung der Rangierfeldvorrichtung sollen hierbei nicht auf die oben beschriebene Anwendung und Ausführungsform beschränkt sein. Insbesondere können die Rangierfeldvorrichtung und/oder das Baukastensystem zur Herstellung der Rangierfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a-b: ein Teil eines Rangierfelds mit einer Rangierfeldvorrichtung, welche eine vollständig montierte Verbindungseinheit in einem ersten Betriebszustand umfasst, in verschiedenen perspektivischen Darstellungen,
- Fig. 2a-c: die vollständig montierte Verbindungseinheit in einem zweiten Betriebszustand in verschiedenen perspektivischen Darstellungen,
- Fig. 3a-b: eine Rahmeneinheit der Verbindungseinheit in verschiedenen Darstellungen,
- Fig. 4a-e: ein Verbindungsmodul und ein weiteres Verbindungsmodul der Verbindungseinheit in verschiedenen perspektivischen Darstellungen,
- Fig. 5a-b: ein Abdeckelement der Verbindungseinheit in verschiedenen perspektivischen Darstellungen,
- Fig. 6a-c: ein Modulhalter und/oder ein Teil eines Modulhalters der Verbindungseinheit in verschiedenen perspektivischen Darstellungen,
- Fig. 7a-b: der Modulhalter in dem ersten Betriebszustand und dem zweiten Betriebszustand,
- Fig. 8a-b: eine Darstellung einer frontseitigen Montage des Verbindungsmoduls in dem Modulhalter,
- Fig. 9: eine Darstellung eines in dem Modulhalter montierten Abdeckelements,
- Fig. 10: eine Frontseite einer voll bestückten Verbindungseinheit,
- Fig. 11a-e: Teile einer frontseitigen Kabelmanagereinheit der Verbindungseinheit und Befestigungsmöglichkeiten der Teile der frontseitigen Kabelmanagereinheit in verschiedenen perspektivischen Darstellungen,
- Fig. 12a-c: alternative Befestigungsmöglichkeiten der Teile der frontseitigen Kabelmanagereinheit in verschiedenen Darstellungen,
- Fig. 13a-c: eine rückseitige Kabelmanagereinheit der Verbindungseinheit in verschiedenen perspektivischen Darstellungen,
- Fig. 14a-c: eine Kabelkomponente und eine zugehörige Komponentenhalterung der rückseitigen Kabelmanagereinheit in verschiedenen perspektivischen Darstellungen,
- Fig. 15a-c: eine weitere Kabelkomponente und eine zugehörige weitere Komponentenhalterung der rückseitigen Kabelmanagereinheit in verschiedenen perspektivischen Darstellungen,
- Fig. 16a-f: eine Darstellung eines Koppelvorgangs für eine rückseitige Montage des Verbindungsmoduls in dem Modulhalter,
- Fig. 17a-b: eine Darstellung einer Entsicherungseinheit der rückseitigen Kabelmanagereinheit zur Montage der rückseitigen Kabelmanagereinheit,
- Fig. 18a-b: eine Darstellung einer Bewegung des Verbindungsmoduls in dem Modulhalter und einer zugehörigen Bewegung eines in einem Kabelüberlängenaufnahmebereich der rückseitigen Kabelmanagereinheit angeordneten Kabels,
- Fig. 19a-c: ein in einem Bereich einer Frontseite der Verbindungseinheit angeordneter Funktionseinheitenaufnahmebereich und Funktionseinheiten der Verbindungseinheit in verschiedenen perspektivischen Darstellungen,
- Fig. 20a-c: ein in einem Bereich einer Rückseite der Verbindungseinheit angeordneter weiterer Funktionseinheitenaufnahmebereich und eine weitere Funktionseinheit der Verbindungseinheit in verschiedenen perspektivischen Darstellungen,
- Fig. 21a-b: zwei unterschiedliche Befestigungselemente der Rangierfeldvorrichtung zu einer rückseitigen Befestigung der Verbindungseinheit in perspektivischen Darstellungen,
- Fig. 22: eine Verbindungseinheit einer weiteren Rangierfeldvorrichtung in einer perspektivischen Darstellung,
- Fig. 23: eine Frontseite einer voll bestückten Verbindungseinheit aus Figur 22,
- Fig. 24: eine Rahmeneinheit der Verbindungseinheit aus Figur 22 in einer Explosionsdarstellung,
- Fig. 25a-c: in einem Bereich einer Rückseite der Verbindungseinheit aus Figur 22 angeordnete weitere Funktionseinheitenaufnahmebereiche und weitere Funktionseinheiten der Verbindungseinheit aus Figur 22 in verschiedenen perspektivischen Darstellungen,
- Fig. 26: ein Befestigungselement der weiteren Rangierfeldvorrichtung aus Figur 22 zu einer rückseitigen Befestigung der Verbindungseinheit aus Figur 22 in einer perspektivischen Darstellung,
- Fig. 27: ein erster Baukasten eines Baukastensystems zur Herstellung der Rangierfeldvorrichtung aus Figur 1 und der weiteren Rangierfeldvorrichtung aus Figur 22,
- Fig. 28: ein zweiter Baukasten des Baukastensystems zur Herstellung der Rangierfeldvorrichtung aus Figur 1 und der weiteren Rangierfeldvorrichtung aus Figur 22 und
- Fig. 29: ein dritter Baukasten des Baukastensystems zur Herstellung der Rangierfeldvorrichtung aus Figur 1 und der weiteren Rangierfeldvorrichtung aus Figur 22.

### Beschreibung der Ausführungsbeispiele

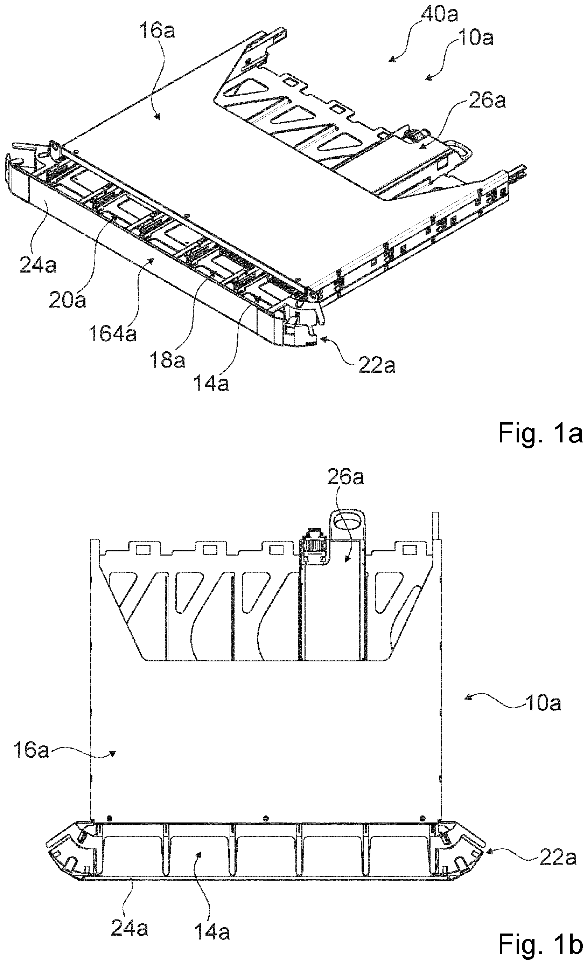

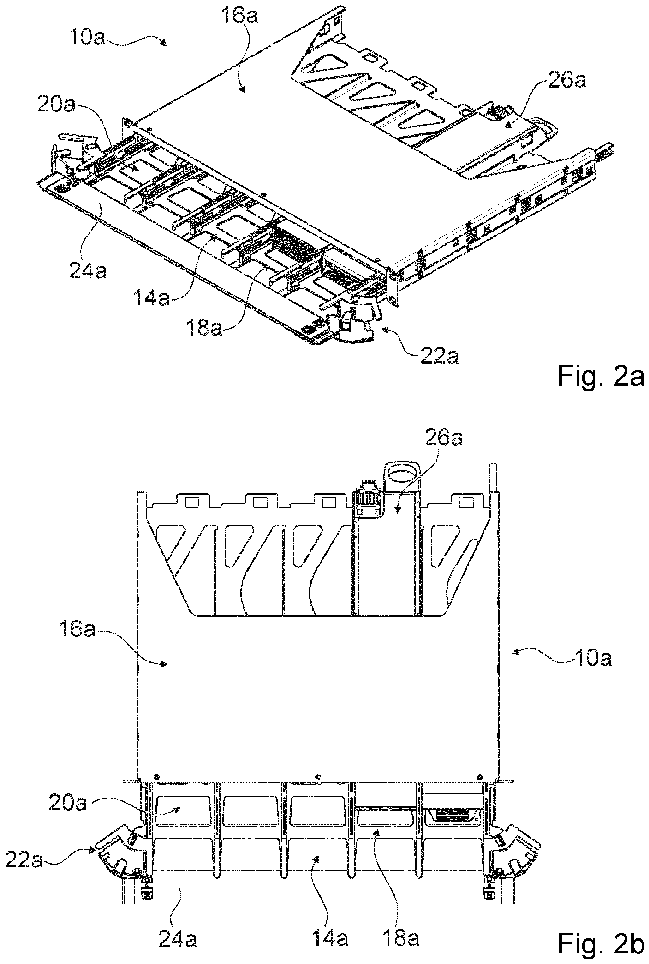

Die Figuren 1a bis 2c zeigen zumindest einen Teil eines Rangierfelds 40a in verschiedenen Betriebszuständen, insbesondere in einer Aufbewahrungsposition (vgl. Figuren 1a und 1b) und in einer Bearbeitungsposition (vgl. Figuren 2a bis 2c), und in verschiedenen perspektivischen Darstellungen. Das Rangierfeld 40a ist zur Handhabung von als Lichtwellenleiterkabeln ausgebildeten Kabeln vorgesehen. Das Rangierfeld 40a ist im vorliegenden Fall zum Einsatz in einer Trägereinheit (nicht dargestellt), im vorliegenden Fall insbesondere einem, insbesondere Standard, 19-Zoll Rack, vorgesehen und kann die Trägereinheit insbesondere auch umfassen. Grundsätzlich ist jedoch auch denkbar, eine Trägereinheit als beliebige andere Trägereinheit, vorteilhaft als beliebiges anderes Rack, auszubilden und/oder von Lichtwellenleiterkabeln abweichende Kabel, wie beispielsweise elektrische Kabel, zu verwenden.

Das Rangierfeld 40a umfasst eine Rangierfeldvorrichtung. Die Rangierfeldvorrichtung weist zumindest eine Verbindungseinheit 10a auf. Die Verbindungseinheit 10a ist als Kabelmanagementeinheit ausgebildet. Die Verbindungseinheit 10a ist im vorliegenden Fall als 19-Zoll-Einschub ausgebildet. Zudem weist die Verbindungseinheit 10a im vorliegenden Fall eine Höhe von 1 U und/oder 44,45 mm auf. Alternativ ist jedoch auch denkbar, eine Verbindungseinheit beispielsweise als 10-Zoll-Einschub, als 21-Zoll-Einschub und/oder als 24-Zoll-Einschub auszubilden. Zudem könnte eine Verbindungseinheit eine Höhe von 2 U, 3 U, 4 U und/oder eine beliebige andere Höhe aufweisen. Die Verbindungseinheit 10a definiert eine Vielzahl von, insbesondere standardisierten und/oder genormten, Ports. Jeder Port ist dabei dazu vorgesehen, wahlweise ein, insbesondere standardisiertes und/oder genormtes, Einbausteckverbinderelement, insbesondere für einen geräteseitigen Anschluss, und/oder zumindest einen Teil einer, insbesondere standardisierten und/oder genormten, Funktionsüberwachungseinheit aufzunehmen. Im vorliegenden Fall weist die Verbindungseinheit 10a in einem Verbindungsbereich 14a eine Portdichte, insbesondere eine Anzahl von, insbesondere standardisierten und/oder genormten, Ports von 0,58 Ports/cm² auf. Der Verbindungsbereich 14a ist dabei an einer Frontseite der Verbindungseinheit 10a angeordnet. Im vorliegenden Fall entspricht der Verbindungsbereich 14a einem im Wesentlichen gesamten vorderen Bereich der Verbindungseinheit 10a. Somit weist die Verbindungseinheit 10a im vorliegenden Fall einen Verbindungsbereich 14a mit einer Portdichte von 120 Ports/U auf.

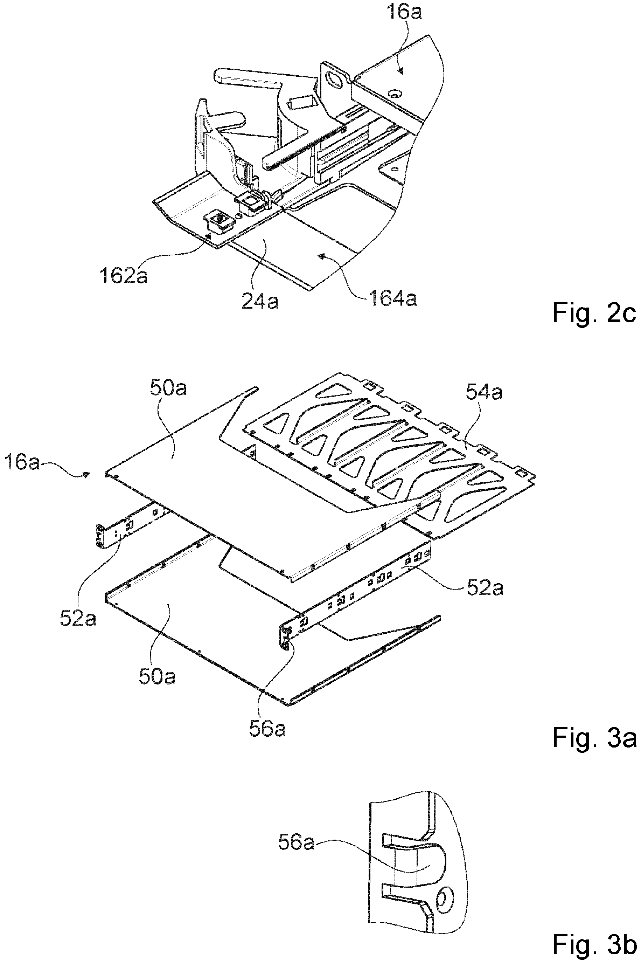

Insbesondere um dies zu erreichen, umfasst die Verbindungseinheit 10a eine Rahmeneinheit 16a (vgl. auch Figuren 3a und 3b). Die Rahmeneinheit 16a ist als Chassis ausgebildet. Die Rahmeneinheit 16a bildet im vorliegenden Fall ein Außengehäuse der Verbindungseinheit 10a. Die Rahmeneinheit 16a besteht im vorliegenden Fall aus Metall, insbesondere zumindest einem Blech. Die Rahmeneinheit 16a umfasst zwei Deckplatten 50a. Die Deckplatten 50a sind zumindest im Wesentlichen identisch zueinander ausgebildet. Die Deckplatten 50a sind jeweils zumindest im Wesentlichen rechteckig, insbesondere bei einer Betrachtung senkrecht zu einer Haupterstreckungsebene der Deckplatten 50a, mit einer rückseitigen Aussparung ausgebildet. Eine Deckplatte 50a der Deckplatten 50a bildet und/oder definiert eine Unterseite der Rahmeneinheit 16a und/oder der Verbindungseinheit 10a. Eine weitere Deckplatte 50a der Deckplatten 50a bildet und/oder definiert eine Oberseite der Rahmeneinheit 16a und/oder der Verbindungseinheit 10a. Die Deckplatten 50a begrenzen somit die Höhe der Rahmeneinheit 16a und/oder der Verbindungseinheit 10a.

Ferner umfasst die Rahmeneinheit 16a zwei Seitenwände 52a. Die Seitenwände 52a sind zumindest im Wesentlichen identisch zueinander ausgebildet. Die Seitenwände 52a sind zumindest im Wesentlichen rechteckig ausgebildet, insbesondere bei einer Betrachtung senkrecht zu einer Haupterstreckungsebene der Seitenwände 52a. Die Seitenwände 52a sind zumindest im Wesentlichen L-förmig ausgebildet. Eine lange Seite der L-Form bildet und/oder definiert dabei eine Seite der Rahmeneinheit 16a und/oder der Verbindungseinheit 10a. Ein kurze Seite der L-Form definiert einen Befestigungsabschnitt, insbesondere zu einer frontseitigen Befestigung der Rahmeneinheit 16a und/oder der Verbindungseinheit 10a an der Trägereinheit. Die Seitenwände 52a begrenzen somit eine Breite der Rahmeneinheit 16a und/oder der Verbindungseinheit 10a. Darüber hinaus umfasst jede Seitenwand 52a zumindest ein Befestigungshilfselement 56a (vgl. insbesondere Figur 3b). Die Befestigungshilfselemente 56a sind an der kurzen Seite der L-Form angeordnet. Die Befestigungshilfselemente 56a sind zumindest im Wesentlichen laschenförmig und/oder zungenförmig ausgebildet. Die Befestigungshilfselemente 56a sind dazu vorgesehen, eine Befestigung der Rahmeneinheit 16a und/oder der Verbindungseinheit 10a an der Trägereinheit zu vereinfachen. Die Befestigungshilfselemente 56a sind dazu vorgesehen, zumindest temporär eine Gewichtskraft der Verbindungseinheit 10a aufzunehmen und an die Trägereinheit zu übertragen. Die Befestigungshilfselemente 56a sind dabei korrespondierend zu Befestigungsausnehmungen der Trägereinheit ausgebildet. Alternativ ist jedoch auch denkbar, auf Befestigungshilfselemente zu verzichten.

Ferner umfasst die Rahmeneinheit 16a zumindest eine Halteplatte 54a. Die Halteplatte 54a sind zumindest im Wesentlichen rechteckig ausgebildet, insbesondere bei einer Betrachtung senkrecht zu einer Haupterstreckungsebene der Halteplatte 54a. Die Halteplatte 54a ist im Bereich einer Rückseite der Verbindungseinheit 10a angeordnet. Die Halteplatte 54a ist in einem Bereich der rückseitigen Aussparungen der Deckplatten 50a angeordnet. Die Halteplatte 54a ist dabei bei einer Betrachtung senkrecht zur Haupterstreckungsebene der Deckplatten 50a zu wenigstens einem Großteil zwischen den Deckplatten 50a angeordnet. Zudem ist die Halteplatte 54a in einem Nahbereich der Unterseite der Rahmeneinheit 16a und/oder Verbindungseinheit 10a angeordnet. Die Halteplatte 54a ist zumindest im Wesentlichen an eine Form und/oder Kontur, insbesondere die Breite der Rahmeneinheit 16a und/oder der Verbindungseinheit 10a angepasst. Die Halteplatte 54a ist zu einer, insbesondere geordneten und/oder geführten, Aufnahme von zumindest einem Bauteil der Verbindungseinheit 10a vorgesehen. Die Deckplatten 50a, die Seitenwände 52a und die Halteplatte 54a können mittels einer beliebigen Befestigungsmethode miteinander gekoppelt werden. Im vorliegenden Fall sind die Deckplatten 50a, die Seitenwände 52a und die Halteplatte 54a zumindest teilweise mittels Schraubverbindungen miteinander verbunden. Die Deckplatten 50a, die Seitenwände 52a und die Halteplatte 54a definieren einen Aufnahmeraum, im vorliegenden Fall insbesondere zumindest zur Aufnahme zumindest eines Verbindungsmoduls 18a, 19a.

Zudem ist die Rahmeneinheit 16a modular aufgebaut. Die Deckplatten 50a, die Seitenwände 52a und die Halteplatte 54a sind dabei abhängig von einer Breite und/oder einer Höhe der Rahmeneinheit 16a und/oder der Verbindungseinheit 10a aus einer Gruppe 136, 138, 139 von Deckplatten 50a, Seitenwänden 52a und/oder Halteplatten 54a auswählbar. Im vorliegenden Fall ist zumindest die Höhe der Rahmeneinheit 16a und/oder der Verbindungseinheit 10a zumindest im Wesentlichen beliebig wählbar. Die Höhe kann dabei insbesondere 1 · U, 2 · U, 3 · U, 4 · U und/oder einer beliebigen anderen Höhe entsprechen. Demzufolge ist die Verbindungseinheit 10a im vorliegenden Fall modular aufgebaut und kann insbesondere zumindest in der Höhe variiert werden.

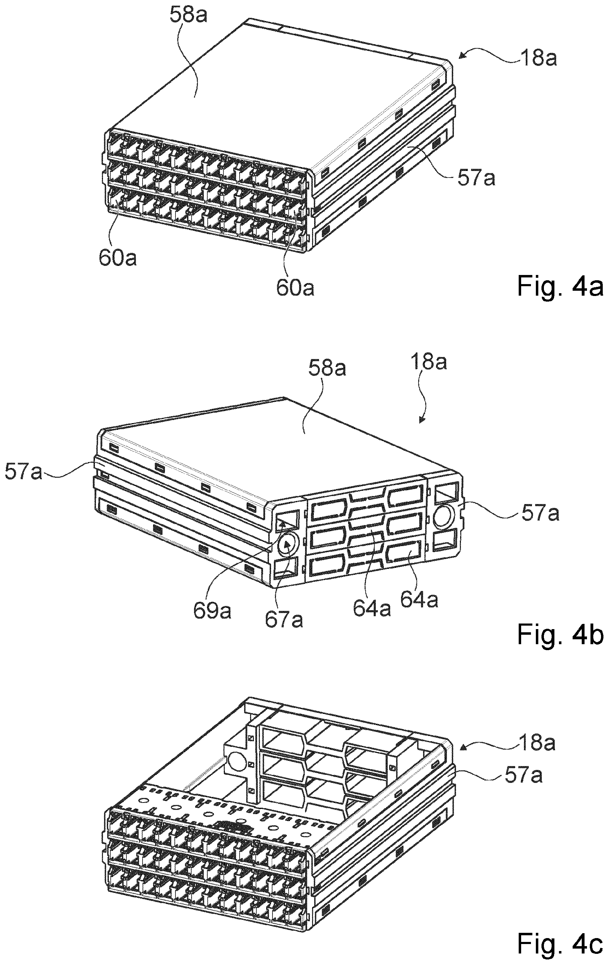

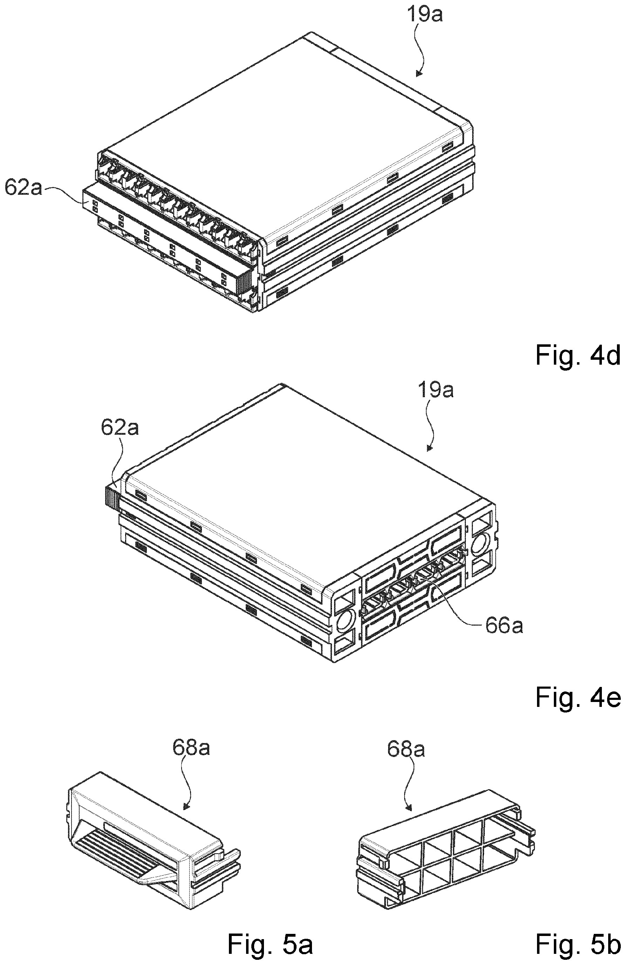

Die Verbindungseinheit 10a umfasst ferner zumindest ein, insbesondere in dem Aufnahmeraum der Rahmeneinheit 16a angeordnetes, Verbindungsmodul 18a, 19a (vgl. insbesondere Figuren 4a bis 4e). Das zumindest eine Verbindungsmodul 18a, 19a ist dazu vorgesehen, zumindest einen der Ports bereitzustellen. Der zumindest eine Port ist dabei auf einer, insbesondere der Frontseite der Verbindungseinheit 10a zugewandten, Seite des zumindest einen Verbindungsmoduls 18a, 19a angeordnet. Im vorliegenden Fall kann die Verbindungseinheit 10a, insbesondere wahlweise, eine Mehrzahl von Verbindungsmodulen 18a, 19a, insbesondere bis zu fünf Verbindungsmodule 18a, 19a, insbesondere desselben Typs, aufweisen. Die Verbindungsmodule 18a, 19a sind dabei jeweils einzeln und unabhängig von den anderen Verbindungsmodulen 18a, 19a bezüglich der Rahmeneinheit 16a lösbar, verbindbar und/oder austauschbar. Die Verbindungsmodule 18a, 19a sind zudem zumindest im Wesentlichen baugleich zueinander. Ferner sind die Verbindungsmodule 18a, 19a modular aufgebaut. Die Figuren 4a bis 4e zeigen dabei beispielhaft zwei modular unterschiedlich aufgebaute Verbindungsmodule 18a, 19a.

Im Folgenden wird nun ein Aufbau eines Verbindungsmoduls 18a der Verbindungsmodule 18a, 19a näher beschrieben, wobei die folgende Beschreibung, insbesondere aufgrund der zu wenigstens einem Großteil baugleichen Bauweise der Verbindungsmodule 18a, 19a, auch auf das weitere Verbindungsmodul 19a und/oder weitere Verbindungsmodule 18a, 19a übernommen werden kann.

Das Verbindungsmodul 18a besteht im vorliegenden Fall aus einem Kunststoff. Alternativ ist jedoch auch denkbar, ein Verbindungsmodul 18a zumindest teilweise, zu wenigstens einem Großteil und/oder vollständig, aus einem von Kunststoff abweichenden Material, wie beispielsweise einem Metall und/oder einem Verbundwerkstoff zu fertigen. Das Verbindungsmodul 18a umfasst zwei Modulwände 57a. Die Modulwände 57a sind als Seitenwände ausgebildet. Haupterstreckungsebenen der Modulwände 57a sind dabei in einem montierten Zustand zumindest im Wesentlichen parallel zu Haupterstreckungsebenen der Seitenwände 52a ausgerichtet. Die Modulwände 57a sind zumindest im Wesentlichen identisch zueinander ausgebildet. Die Modulwände 57a sind zumindest im Wesentlichen rechteckig ausgebildet, insbesondere bei einer Betrachtung senkrecht zu einer Haupterstreckungsebene der Modulwände 57a. Die Modulwände 57a sind zumindest im Wesentlichen L-förmig ausgebildet. Eine lange Seite der L-Form bildet und/oder definiert dabei eine Seite des Verbindungsmoduls 18a. Die Modulwände 57a begrenzen somit eine Breite des Verbindungsmoduls 18a. Das Verbindungsmodul 18a weist eine Breite von höchstens einem Fünftel der Breite der Verbindungseinheit 10a auf. Im vorliegenden Fall weist das Verbindungsmodul 18a eine Breite von etwa 8 cm bis 8,5 cm auf. Zudem definieren die Modulwände 57a eine Höhe des Verbindungsmoduls 18a. Im vorliegenden Fall weist das Verbindungsmodul 18a eine Höhe von etwa 3,33 cm und/oder 0,75 U auf. Ferner definiert eine kurze Seite der L-Form jeweils einen Koppelabschnitt des Verbindungsmoduls 18a. Der Koppelabschnitt umfasst zumindest ein erstes Modulkoppelelement 67a und zumindest ein zweites Modulkoppelelement 69a. Die Modulkoppelelemente 67a, 69a sind zur, insbesondere wahlweisen Kopplung, mit zumindest einem Bauteil der Verbindungseinheit 10a vorgesehen. Alternativ ist jedoch auch denkbar, dass ein Verbindungsmodul frei von einem Koppelabschnitt und/oder von Modulkoppelementen ist. Zudem könnte ein Verbindungsmodul genau ein Modulkoppelelement aufweisen.

Ferner umfasst das Verbindungsmodul 18a zwei Moduldeckel 58a. Die Moduldeckel 58a sind zumindest im Wesentlichen identisch zueinander ausgebildet. Die Moduldeckel 58a sind jeweils zumindest im Wesentlichen rechteckig ausgebildet, insbesondere bei einer Betrachtung senkrecht zu einer Haupterstreckungsebene der Moduldeckel 58a. Die Moduldeckel 58a sind zumindest im Wesentlichen plattenförmig. Ein Moduldeckel 58a der Moduldeckel 58a bildet und/oder definiert eine Unterseite des Verbindungsmoduls 18a. Ein weiterer Moduldeckel 58a der Moduldeckel 58a bildet und/oder definiert eine Oberseite des Verbindungsmoduls 18a. Die Moduldeckel 58a begrenzen somit die Höhe des Verbindungsmoduls 18a. Die Moduldeckel 58a können mittels einer beliebigen Befestigungsmethode mit den Modulwänden 57a gekoppelt werden. Im vorliegenden Fall sind die Moduldeckel 58a mittels einer Rastverbindung mit den Modulwänden 57a verbunden. Alternativ ist jedoch auch denkbar, auf zumindest einen Moduldeckel zu verzichten und/oder auf Moduldeckel vollständig zu verzichten. In diesem Fall bildet ein Verbindungsmodul insbesondere eine vorteilhaft zugängliche Modulkassette aus.

Die Modulwände 57a und vorteilhaft die Moduldeckel 58a definieren ein Modulgehäuse des Verbindungsmoduls 18a. Zudem definieren die Modulwände 57a und vorteilhaft die Moduldeckel 58a einen Kabelaufnahmebereich sowie einen, insbesondere auf einer der kurzen Seite der L-Form des Verbindungsmoduls 18a abgewandten Seite angeordneten, frontseitigen Verbindungsbereich und einen rückseitigen Aufnahmebereich. Im vorliegenden Fall stellt das Verbindungsmodul 18a, insbesondere im frontseitigen Verbindungsbereich, genau 18 Ports bereit. Die 18 Ports sind in genau drei Reihen, insbesondere bezogen auf eine Höhe des Verbindungsmoduls 18a, angeordnet, was insbesondere 6 Ports pro Reihe entspricht. Jeder Port des Verbindungsmoduls 18a ist dazu vorgesehen, ein Einbausteckverbinderelement und/oder ein Sechstel einer Funktionsüberwachungseinheit aufzunehmen.

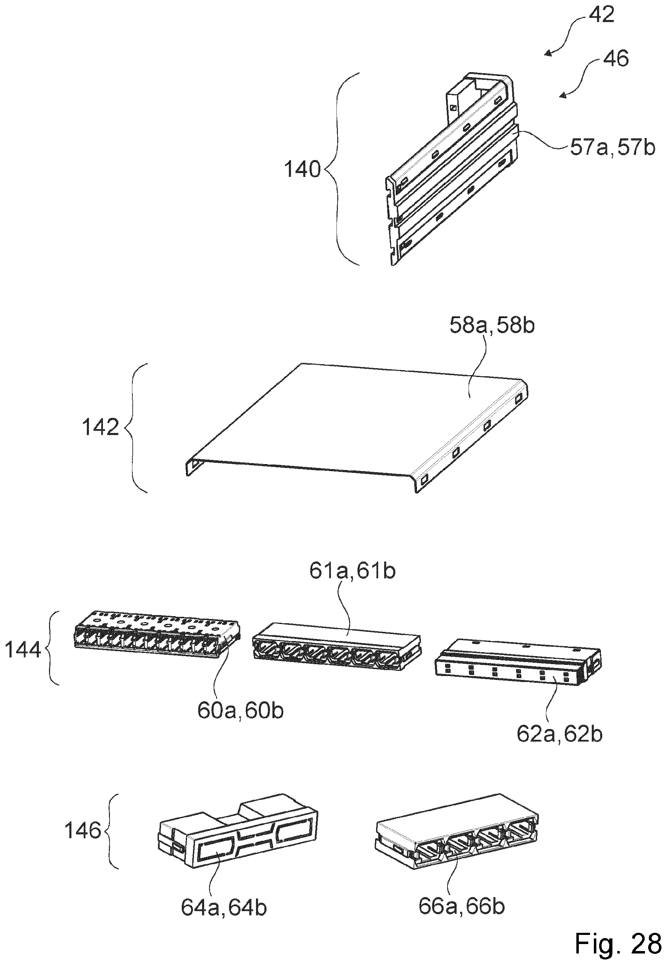

Insbesondere um einen Einbau von Einbausteckverbinderelementen in die Verbindungsmodule 18a, 19a zu vereinfachen, sind im vorliegenden Fall sechs Einbausteckverbinderelemente zu einem frontseitigen Modulelement 60a, 61a zusammengefasst. Ein erstes frontseitiges Modulelement 60a der Modulelemente 60a, 61a weist sechs Einbausteckverbinderelemente, jeweils zur Verbindung von einem Duplex-Steckverbinderelement, im vorliegenden Fall insbesondere einem LC-Duplex-Steckverbinderelement, auf. Ferner weist ein zweites frontseitiges Modulelement 61a der Modulelemente 60a, 61a sechs Einbausteckverbinderelemente, jeweils zur Verbindung von einem Mehrfaser-Steckverbinderelement, im vorliegenden Fall insbesondere einem MPO-Steckverbinderelement, auf (vgl. auch Figur 28). Zudem bildet die Funktionsüberwachungseinheit ein, insbesondere drittes, frontseitiges Modulelement 62a aus. Zudem ist denkbar, weitere frontseitige Modulelemente, beispielsweise zur Verbindung von Simplex-Steckverbinderelementen und/oder zur Verbindung weiterer Funktionseinheiten, vorzusehen.

Im vorliegenden Fall weisen die Verbindungsmodule 18a, 19a die frontseitigen Modulelemente 60a, 61a, 62a, insbesondere desselben Typs, auf. Die frontseitigen Modulelemente 60a, 61a, 62a sind dabei zumindest im Wesentlichen baugleich zueinander. Die frontseitigen Modulelemente 60a, 61a, 62a belegen genau eine Reihe, insbesondere Portreihe, der Verbindungsmodule 18a, 19a. Die frontseitigen Modulelemente 60a, 61a, 62a können mittels einer beliebigen Befestigungsmethode mit den Modulwänden 57a und/oder den Moduldeckeln 58a gekoppelt werden. Im vorliegenden Fall sind die frontseitigen Modulelemente 60a, 61a, 62a mittels einer Schwalbenschwanzverbindung mit den Modulwänden 57a verbunden. Die frontseitigen Modulelemente 60a, 61a, 62a sind dabei abhängig von einem Einsatzzweck der Verbindungsmodule 18a, 19a aus einer Gruppe 144 von frontseitigen Modulelementen 60a, 61a, 62a auswählbar. Im vorliegenden Fall ist somit zumindest ein Verbindungstyp der Verbindungsmodule 18a, 19a frei wählbar. Zudem ist die Verbindungseinheit 10a modular aufgebaut.

Darüber hinaus umfassen die Verbindungsmodule 18a, 19a im vorliegenden Fall, insbesondere zusätzlich, rückseitige Modulelemente 64a, 66a, insbesondere desselben Typs. Die rückseitigen Modulelemente 64a, 66a sind in dem rückseitigen Aufnahmebereich angeordnet. Die rückseitigen Modulelemente 64a, 66a sind dazu vorgesehen, dem rückseitigen Aufnahmebereich zugeführte Kabel zumindest teilweise zu führen. Die rückseitigen Modulelemente 64a, 66a sind dabei zumindest im Wesentlichen baugleich zueinander. Die rückseitigen Modulelemente 64a, 66a belegen, insbesondere analog zu den frontseitigen Modulelementen 60a, 61a, 62a, genau eine Reihe der Verbindungsmodule 18a, 19a. Die rückseitigen Modulelemente 64a, 66a können dabei mittels einer beliebigen Befestigungsmethode mit den Modulwänden 57a und/oder den Moduldeckeln 58a gekoppelt werden. Im vorliegenden Fall sind die rückseitigen Modulelemente 64a, 66a mittels einer Schwalbenschwanzverbindung mit den Modulwänden 57a verbunden. Die rückseitigen Modulelemente 64a, 66a sind dabei abhängig von einem Einsatzzweck der Verbindungsmodule 18a, 19a und/oder abhängig von einem korrespondierenden frontseitigen Modulelement 60a, 61a, 62a aus einer Gruppe 146 von rückseitigen Modulelementen 64a, 66a auswählbar. Alternativ ist jedoch auch denkbar, auf rückseitige Modulelemente vollständig zu verzichten.

Die Figuren 5a und 5b zeigen ferner ein wahlweise verwendbares Abdeckelement 68a der Verbindungseinheit 10a. Das Abdeckelement 68a kann insbesondere anstatt eines Verbindungsmoduls 18a, 19a verwendet werden und dient zum Schutz des Aufnahmeraums der Rahmeneinheit 16a.

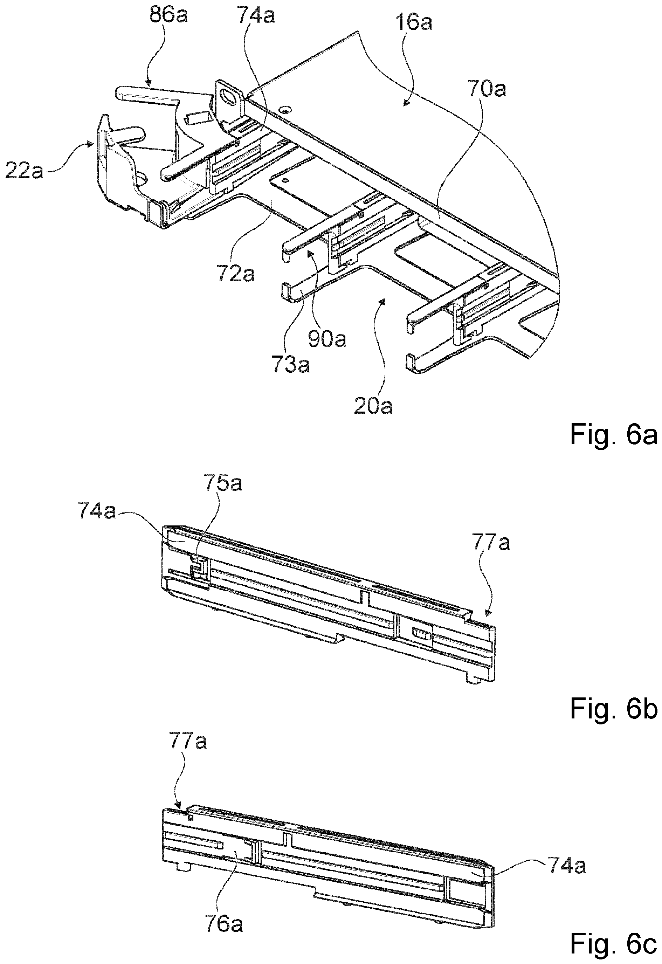

Insbesondere um eine Zugänglichkeit zu den Verbindungsmodulen 18a, 19a zu verbessern, umfasst die Verbindungseinheit 10a zumindest einen Modulhalter 20a (vgl. insbesondere Figuren 6a bis 9). Der Modulhalter 20a ist relativ zu der Rahmeneinheit 16a beweglich, im vorliegenden Fall insbesondere linear beweglich. Der Modulhalter 20a ist dabei, insbesondere schubladenartig, von einer Aufbewahrungsposition (vgl. insbesondere auch Figuren 1a und 1b) in eine Bearbeitungsposition (vgl. insbesondere auch Figuren 2a bis 2c) und umgekehrt bewegbar.

Der Modulhalter 20a umfasst zumindest eine Lagerplatte 72a. Die Lagerplatte 72a besteht im vorliegenden Fall aus Metall, insbesondere einem Blech. Die Lagerplatte 72a ist zumindest im Wesentlichen plattenförmig ausgebildet. Die Lagerplatte 72a ist zumindest im Wesentlichen rechteckig ausgebildet, insbesondere bei einer Betrachtung senkrecht zu einer Haupterstreckungsebene der Lagerplatte 72a. Die Lagerplatte 72a relativ zu der Rahmeneinheit 16a beweglich. Die Lagerplatte 72a ist im Bereich der Frontseite der Verbindungseinheit 10a angeordnet. Die Lagerplatte 72a ist dabei bei einer Betrachtung senkrecht zu einer Haupterstreckungsebene der Deckplatten 50a zu wenigstens einem Großteil zwischen den Deckplatten 50a angeordnet. Die Lagerplatte 72a ist zumindest im Wesentlichen an eine Form und/oder Kontur, insbesondere die Breite der Rahmeneinheit 16a und/oder der Verbindungseinheit 10a angepasst. Zudem ist die Lagerplatte 72a im Nahbereich der Unterseite der Rahmeneinheit 16a und/oder Verbindungseinheit 10a angeordnet.

Darüber hinaus weist der Modulhalter 20a mehrere Lagerwände 74a auf (vgl. insbesondere Figuren 6b und 6c). Im vorliegenden Fall weist der Modulhalter 20a genau sechs Lagerwände 74a auf. Die Lagerwände 74a bestehen aus Metall. Die Lagerwände 74a sind zudem relativ zu der Rahmeneinheit 16a beweglich. Die Lagerwände 74a sind zumindest im Wesentlichen rechteckig ausgebildet, insbesondere bei einer Betrachtung senkrecht zu einer Haupterstreckungsebene der Lagerwände 74a. Die Lagerwände 74a sind als Seitenwände ausgebildet. Haupterstreckungsebenen der Lagerwände 74a sind parallel zueinander angeordnet. Zudem sind die Haupterstreckungsebenen der Lagerwände 74a in einem montierten Zustand zumindest im Wesentlichen parallel zu Haupterstreckungsebenen der Seitenwände 52a und/oder der Modulwände 57a ausgerichtet. Die Lagerwände 74a sind ferner zumindest im Wesentlichen identisch zueinander ausgebildet. Die Lagerwände 74a sind zu wenigstens einem Großteil im Bereich der Frontseite der Verbindungseinheit 10a angeordnet. Die Lagerwände 74a sind dabei bei einer Betrachtung senkrecht zu der Haupterstreckungsebene der Deckplatten 50a zu wenigstens einem Großteil zwischen den Deckplatten 50a angeordnet. Die Lagerwände 74a sind zumindest im Wesentlichen an die Höhe der Verbindungsmodule 18a, 19a angepasst. Zudem entspricht ein Abstand zwischen den Lagerwänden 74a zumindest im Wesentlichen einer Breite der Verbindungsmodule 18a, 19a. Die Lagerplatte 72a und jeweils zwei der Lagerwände 74a definieren einen Modulaufnahmebereich, insbesondere zur Aufnahme eines der Verbindungsmodule 18, 19.

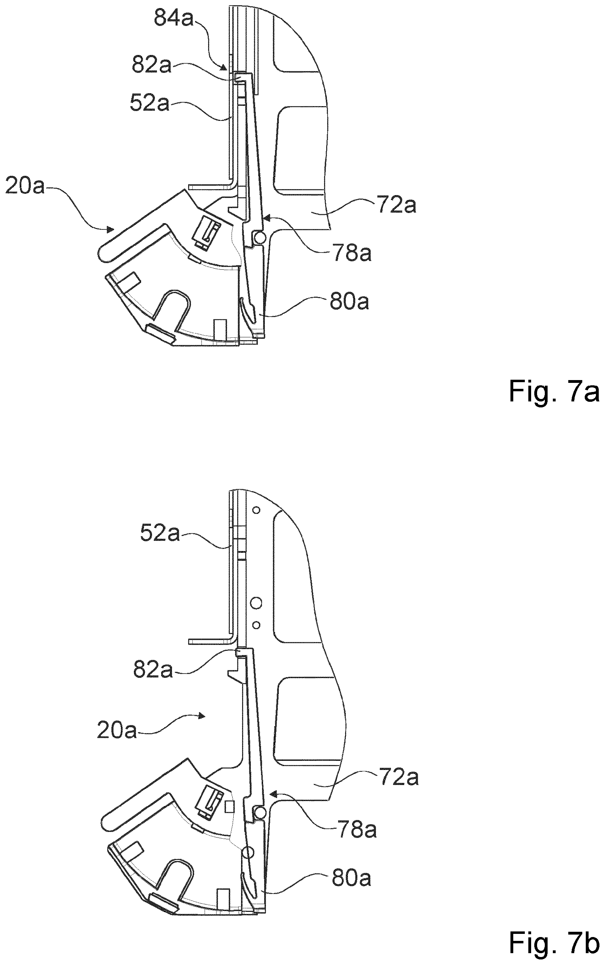

Ferner weist der Modulhalter 20a eine Auslöseeinheit auf (vgl. insbesondere Figuren 7a und 7b). Die Auslöseeinheit umfasst zwei Auslöseelemente 78a. Die Auslöseelemente 78a sind zumindest im Wesentlichen identisch zueinander. Die Auslöseelemente 78a sind fest mit zumindest einem Bauteil des Modulhalters 20a, im vorliegenden Fall insbesondere der Lagerplatte 72a, verbunden. Die Auslöseelemente 78a sind jeweils in einem Nahbereich der gegenüberliegenden Seitenwände 52a der Rahmeneinheit 16a angeordnet. Die Auslöseelemente 78a sind dabei jeweils als Druckstange ausgebildet. Die Auslöseelemente 78a weisen jeweils ein Betätigungselement 80a auf. Die Betätigungselemente 80a sind jeweils an einer der Frontseite der Verbindungseinheit 10a zugewandten Seite und/oder einer einem Benutzer und/oder Bediener zugewandten Seite des Auslöseelements 78a angeordnet. Zudem weisen die Auslöseelemente 78a jeweils ein Auslöserastelement 82a auf. Die Auslöserastelemente 82a sind jeweils an einer der Frontseite der Verbindungseinheit 10a abgewandten Seite und/oder einer einem Benutzer und/oder Bediener abgewandten Seite des Auslöseelements 78a angeordnet. Die Auslöseelemente 78a sind relativ zu der Lagerplatte 72a schwenkbar und/oder drehbar gelagert. In der Aufbewahrungsposition greifen die Auslöserastelemente 82a in Haltevertiefungen 84a der Seitenwände 52a der Rahmeneinheit 16a ein und sichern hierdurch insbesondere den Modulhalter 20a in der Aufbewahrungsposition (vgl. insbesondere Figur 7a). Im vorliegenden Fall werden die Auslöserastelemente 82a dabei mittels eines elastischen Rückstellelements, wie beispielsweise einer Feder, in die Haltevertiefungen 84a der Seitenwände 52a gedrückt.

Um den Modulhalter 20a von der Aufbewahrungsposition in die Bearbeitungsposition zu bewegen, muss zunächst eine durch die Auslöseelemente 78a erzeugte Sicherung gelöst werden. Dazu werden die Betätigungselemente 80a, insbesondere gleichzeitig, mit einer in Richtung der Seitenwände 52a gerichteten Kraft beaufschlagt, wodurch die Auslöserastelemente 82a, insbesondere entgegen der federelastischen Rückstellkraft des Rückstellelements, aus den Haltevertiefungen 84a der Seitenwände 52a herausschwenken und insbesondere die Sicherung gelöst wird und der Modulhalter 20a in die Bearbeitungsposition bewegt werden kann (vgl. insbesondere Figur 7b). Wird der Modulhalter 20a anschließend in die Aufbewahrungsposition zurückbewegt, werden die Auslöserastelemente 82a mittels der federelastischen Rückstellkraft des Rückstellelements selbsttätig wieder in die Haltevertiefungen 84a der Seitenwände 52a zurück geschwenkt. Alternativ ist jedoch auch denkbar, dass Auslöseelemente relativ zu einer Lagerplatte linear beweglich gelagert sind und Betätigungselemente zur Auslösung somit insbesondere mittels einer in Bewegungsrichtung eines Modulhalters gerichteten Kraft beaufschlagt werden.

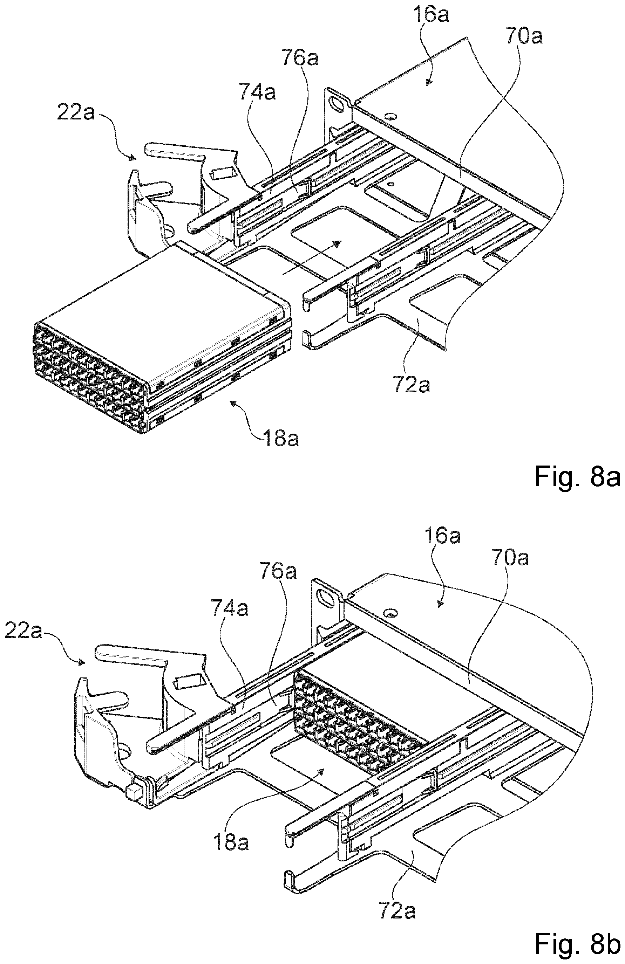

Im vorliegenden Fall ist der Modulhalter 20a dazu vorgesehen, bis zu fünf der Verbindungsmodule 18a, 19a gleichzeitig und insbesondere nebeneinander aufzunehmen. Die Verbindungsmodule 18a, 19a sind zur Montage wahlweise frontseitig und/oder rückseitig in den Modulhalter 20a einführbar und zur Demontage wahlweise frontseitig und/oder rückseitig aus dem Modulhalter 20a entfernbar. Die Figuren 8a und 8b zeigen beispielhaft eine frontseitige Montage eines der Verbindungsmodule 18a, 19a mittels einer linearen Bewegung. In einem vollständig eingeschobenen Zustand werden die Verbindungsmodule 18a, 19a durch eine Rastverbindung in dem jeweiligen Modulaufnahmebereich gehalten. Dazu weist eine dem jeweiligen Modulaufnahmebereich zugeordnete Lagerwand 74a zumindest ein Rastelement 76a auf. Das Rastelement 76a ist im vorliegenden Fall dazu vorgesehen, eine Vorwärtsbewegung des Verbindungsmoduls 18a, 19a zu verhindern. Zudem kann die Lagerwand 74a weitere Rastelemente 75a und/oder Anlageelemente umfassen, welche dazu vorgesehen sein können, eine Rückwärtsbewegung des Verbindungsmoduls 18a, 19a zu verhindern. Im vorliegenden Fall umfasst die Lagerwand 74a zumindest ein weiteres Rastelement 75a, welches insbesondere dazu vorgesehen ist, eine Rückwärtsbewegung des Verbindungsmoduls 18a, 19a zu verhindern. Hierdurch ist der Modulhalter 20a dazu vorgesehen, die Verbindungsmodule 18a, 19a bewegungsfest aufzunehmen und insbesondere bewegungsfest zu lagern. Demnach führt eine Bewegung des Modulhalters 20a zu einer gleichzeitigen und gleichförmigen Bewegung eines in dem Modulhalter 20a angeordneten Verbindungsmoduls 18a, 19a. Da die Höhe der Rahmeneinheit 16a im vorliegenden Fall 1 · U und die Höhe der Verbindungsmodule 18a, 19a 0,75 · U beträgt, umfasst die Verbindungseinheit 10a im vorliegenden Fall zudem eine Abdeckblende 70a. Die Abdeckblende 70a ist dazu vorgesehen, einen aufgrund der unterschiedlichen Höhen der Rahmeneinheit 16a und der Verbindungsmodule 18a, 19a auftretenden Spalt abzudecken. Alternativ ist jedoch auch denkbar, auf ein Abdeckelement zu verzichten.

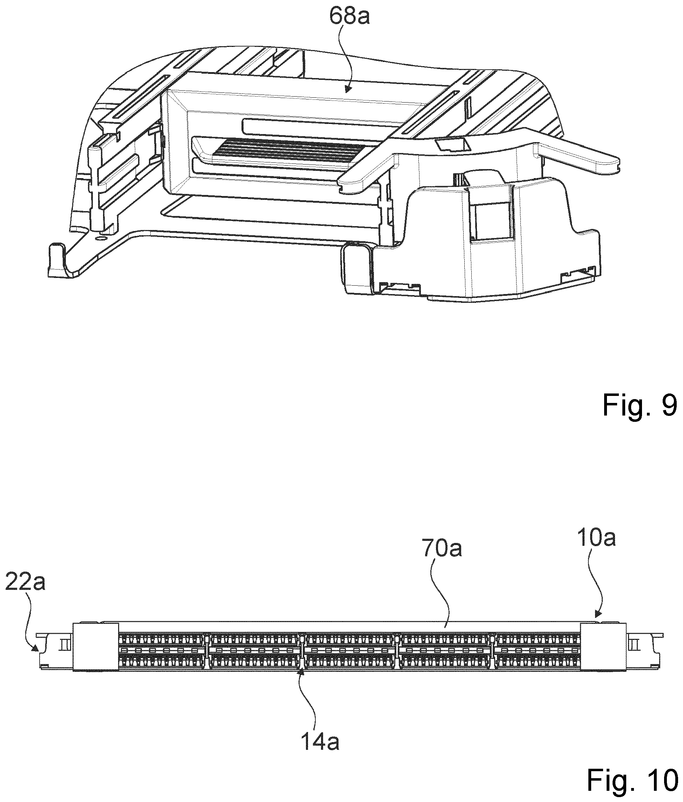

Figur 9 zeigt das alternativ verwendbare Abdeckelement 68a der Verbindungseinheit 10a in einem in dem Modulhalter 20a montierten Zustand.

Figur 10 zeigt ein Blick auf die Frontseite der Verbindungseinheit 10a in einem voll bestückten Zustand. Dabei weist die Verbindungseinheit 10a genau einen Modulhalter 20a auf. Demnach ist die Verbindungseinheit 10a dazu vorgesehen, bis zu fünf der Verbindungsmodule 18a, 19a, gleichzeitig und insbesondere nebeneinander aufzunehmen. Insbesondere da die Höhe der Verbindungsmodule 18a, 19a im vorliegenden Fall 0,75 · U beträgt und eines der Verbindungsmodule 18a, 19a genau 18 Ports aufweist, weist die Verbindungseinheit 10a im vorliegenden Fall einen Verbindungsbereich 14a mit einer Höhe von 0,75 · U und genau 90 Ports auf, was insbesondere einer Portdichte von 120 Ports/U entspricht.

Um den Verbindungsbereich 14a in zumindest einem Betriebszustand, insbesondere einem Schutzbetriebszustand, abzudecken und/oder vor Berührungen zu schützen, weist die Verbindungseinheit 10a zudem ein Schutzelement 24a auf (vgl. insbesondere Figuren 1a bis 2c). Das Schutzelement 24a ist im Bereich der Frontseite der Verbindungseinheit 10a angeordnet. Das Schutzelement 24a besteht aus einem Kunststoff. Das Schutzelement 24a ist zumindest im Wesentlichen rechteckig ausgebildet, insbesondere bei einer Betrachtung senkrecht zu einer Haupterstreckungsebene des Schutzelements 24a. Das Schutzelement 24a ist dabei als Schutzplatte ausgebildet. Das Schutzelement 24a ist zumindest im Wesentlichen plattenförmig. Das Schutzelement 24a weist eine an die Höhe der Rahmeneinheit 16a angepasste Höhe auf. Zudem weist das Schutzelement 24a eine an die Breite der Rahmeneinheit 16a angepasste Breite auf. Das Schutzelement 24a ist dabei abhängig von einer Breite und/oder einer Höhe der Rahmeneinheit 16a und/oder der Verbindungseinheit 10a aus einer Gruppe von Schutzelementen 24a auswählbar.

Das Schutzelement 24a ist mit dem Modulhalter 20a koppelbar. Das Schutzelement 24a ist dabei werkzeuglos und insbesondere zerstörungsfrei mit dem Modulhalter 20a verbindbar und von dem Modulhalter 20a entfernbar. Somit ist das Schutzelement 24a in zumindest einem Betriebszustand mit dem Modulhalter 20a verbunden. Dabei ist das Schutzelement 24a zusammen mit dem Modulhalter 20a gleichförmig und gleichzeitig bewegbar. Darüber hinaus ist das Schutzelement 24a, insbesondere mittels eines Scharniers, im vorliegenden Fall insbesondere eines Filmscharniers, schwenkbar gelagert. Das Schutzelement 24a ist dabei relativ zur Rahmeneinheit 16a schwenkbar um eine in Richtung der Breite der Rahmeneinheit 16a verlaufende Schwenkachse gelagert. Darüber hinaus weist das Schutzelement 24a einen Magnetverschluss 162a auf (vgl. insbesondere Figur 2c). Der Magnetverschluss 162a ist dazu vorgesehen, das Schutzelement 24a in dem Schutzbetriebszustand zu halten und/oder zu fixieren. Zudem umfasst das Schutzelement 24a einen Sichtbereich 164a. Der Sichtbereich 164a ist zumindest im Wesentlichen transparent ausgebildet. Der Sichtbereich 164a erstreckt sich zumindest im Wesentlichen über eine gesamte Breite der Rahmeneinheit 16a. Der Sichtbereich 164a ist dazu vorgesehen, eine Sicht auf den Verbindungsbereich 14a und/oder die Verbindungsmodule 18a, 19a zu ermöglichen.

Darüber hinaus wird bei einer derart großen Portdichte, wie insbesondere von dem Verbindungsbereich 14a bereitgestellt, ein effektives Kabelmanagement insbesondere zur Zuführung und/oder Abführung von Kabeln benötigt.

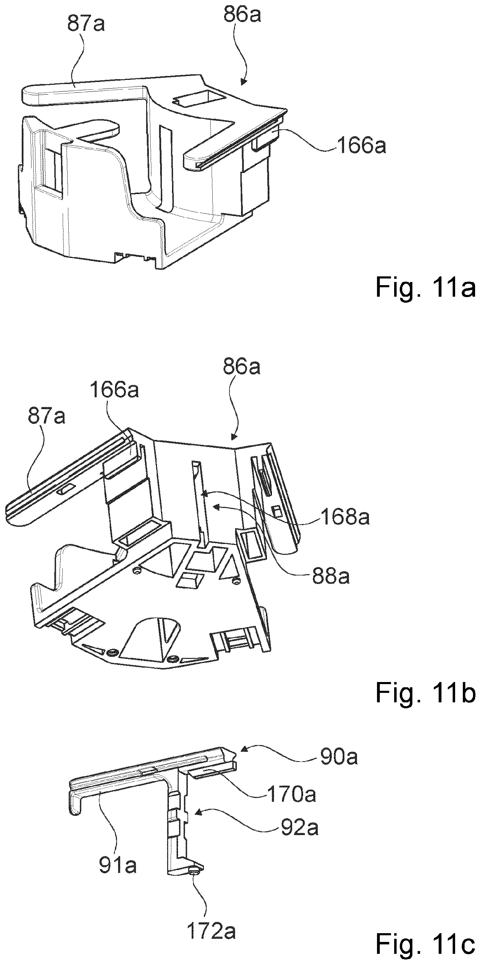

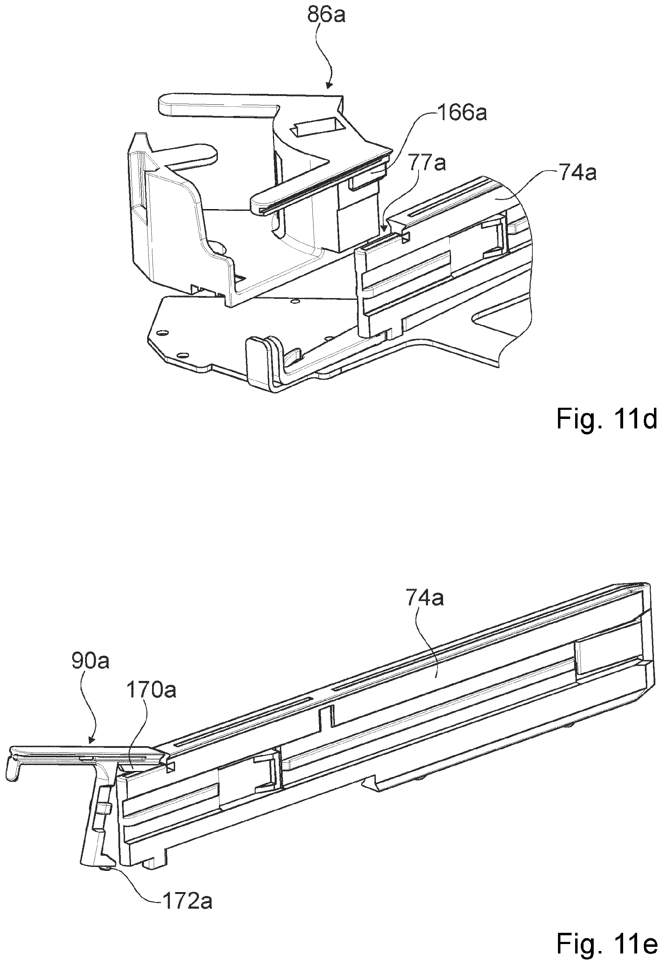

Aus diesem Grund weist die Verbindungseinheit 10a zumindest eine frontseitige Kabelmanagereinheit 22a auf (vgl. insbesondere Figuren 11a bis 12b). Die frontseitige Kabelmanagereinheit 22a ist im Bereich der Frontseite der Verbindungseinheit 10a angeordnet. Die frontseitige Kabelmanagereinheit 22a ist dazu vorgesehen, eine Vielzahl von Kabeln zu führen und in zumindest einem Betriebszustand dem Verbindungsbereich 14a zuzuführen.

Dazu umfasst die frontseitige Kabelmanagereinheit 22a zumindest ein Kabelmodul 86a (vgl. insbesondere Figuren 11a und 11b). Das Kabelmodul 86a besteht aus Kunststoff. Das Kabelmodul 86a ist bei Betrachtung senkrecht zu der Haupterstreckungsebene der Deckplatten 50a zumindest im Wesentlichen kreisringsektorförmig ausgebildet. Ein Mittelpunktswinkel beträgt im vorliegenden Fall insbesondere zwischen 20° und 60°. Das Kabelmodul 86a weist zudem einen zumindest im Wesentlichen zylindermantelförmigen Kabelführungsbereich auf. Der Kabelführungsbereich ist zur Aufrechterhaltung eines minimalen Biegeradius, im vorliegenden Fall insbesondere von 25 mm, vorgesehen. Zudem weist das Kabelmodul 86a zumindest ein Halteelement 87a auf. Im vorliegenden Fall weist das Kabelmodul 86a drei Halteelemente 87a auf. Die Halteelemente 87a sind als Haltefinger ausgebildet. Die Halteelemente 87a schließen den Kabelführungsbereich des Kabelmoduls 86a zumindest teilweise nach oben, insbesondere in Richtung der Oberseite der Rahmeneinheit 16a, ab. Darüber hinaus umfasst das Kabelmodul 86a einen Befestigungsabschnitt 88a. Der Befestigungsabschnitt 88a ist auf einer dem Kabelführungsbereich des Kabelmoduls 86a abgewandten Seite des Kabelmoduls 86a angeordnet. Der Befestigungsabschnitt 88a weist zumindest ein Kabelmodulbefestigungselement 166a auf. Das Kabelmodulbefestigungselement 166a ist als Verbindungsplatte und/oder Verbindungsstift ausgebildet. Das Kabelmodulbefestigungselement 166a ist zu einer Befestigung des Kabelmoduls 86a an dem Modulhalter 20a, insbesondere einer der Lagerwände 74a, vorgesehen (vgl. insbesondere Figur 11d). Das Kabelmodulbefestigungselement 166a ist dazu vorgesehen, mit einem, insbesondere zu dem Kabelmodulbefestigungselement 166a korrespondierenden, Kabelmanagerbefestigungselement 77a, insbesondere einer Aufnahmevertiefung, einer der Lagerwände 74a verbunden zu werden. Das Kabelmodul 86a ist somit mit dem Modulhalter 20a koppelbar. Das Kabelmodul 86a ist im vorliegenden Fall werkzeuglos und insbesondere zerstörungsfrei mit dem Modulhalter 20a verbindbar und von dem Modulhalter 20a entfernbar. Somit ist das Kabelmodul 86a in zumindest einem Betriebszustand mit dem Modulhalter 20a verbunden. Dabei ist das Kabelmodul 86a zusammen mit dem Modulhalter 20a gleichförmig und gleichzeitig bewegbar.

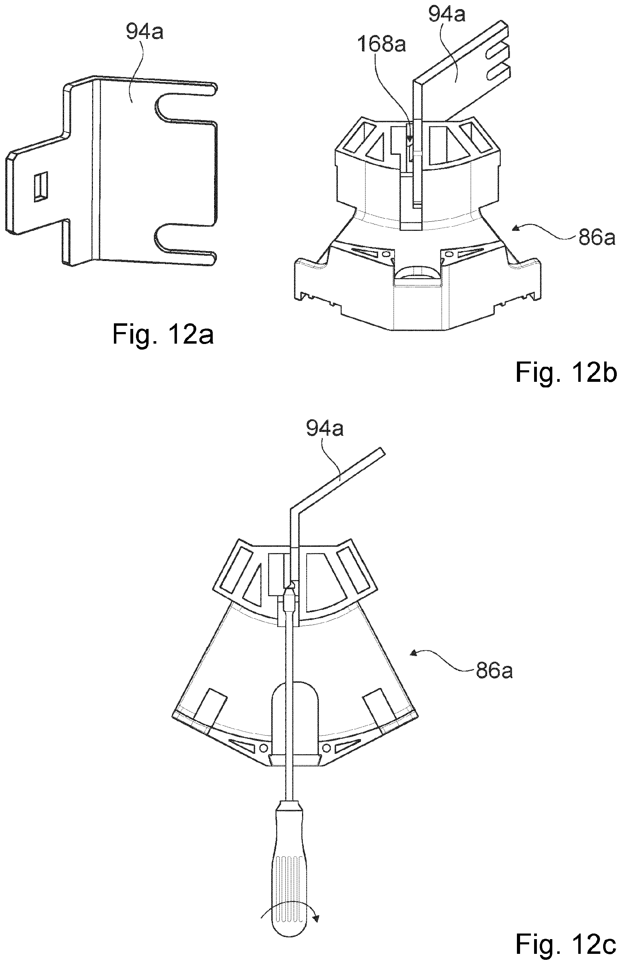

Alternativ dazu ist das Kabelmodul 86a mit einem Halteblech 94a der Rangierfeldvorrichtung koppelbar (vgl. insbesondere Figuren 12a bis 12c). Dazu weist das der Befestigungsabschnitt 88a des Kabelmoduls 86a ein alternatives Kabelmodulbefestigungselement 168a auf. Das alternative Kabelmodulbefestigungselement 168a ist wesentlich verschieden von dem Kabelmodulbefestigungselement 166a ausgebildet. Das alternative Kabelmodulbefestigungselement 168a ist als Rastelement ausgebildet. Das alternative Kabelmodulbefestigungselement 168a ist dazu vorgesehen, mit einem zu dem alternativen Kabelmodulbefestigungselement 168a korrespondierenden weiteren alternativen Kabelmanagerbefestigungselement, insbesondere Rastelement, insbesondere einer Rastausnehmung, des Halteblechs 94a verbunden zu werden. Das Kabelmodul 86a ist in diesem Fall mit Hilfe einfachster Werkzeuge, wie beispielsweise einem Schraubendreher, und insbesondere zerstörungsfrei von dem Halteblech 94a entfernbar (vgl. insbesondere Figur 12c). Das Halteblech 94a kann beispielsweise an der Rahmeneinheit 16a und/oder der Trägereinheit fixiert werden, sodass das Kabelmodul 86a insbesondere unbeweglich relativ zu dem Modulhalter 20a ist. Alternativ ist jedoch auch denkbar, auf ein alternatives Kabelmodulbefestigungselement zu verzichten.

Im vorliegenden Fall umfasst die frontseitige Kabelmanagereinheit 22a zwei Kabelmodule 86a. Die Kabelmodule 86a sind zumindest im Wesentlichen identisch zueinander. Die Kabelmodule 86a sind in einem montierten Zustand jeweils in dem Nahbereich der gegenüberliegenden Seitenwände 52a der Rahmeneinheit 16a angeordnet.

Des Weiteren umfasst die frontseitige Kabelmanagereinheit 22a zumindest einen Kabelhalter 90a (vgl. insbesondere Figur 11c). Der Kabelhalter 90a besteht aus Kunststoff. Der Kabelhalter 90a ist zumindest im Wesentlichen hakenförmig ausgebildet. Der Kabelhalter 90a weist dabei ein, insbesondere zumindest im Wesentlichen fingerförmiges, weiteres Halteelement 91a auf. Das weitere Halteelement 91a begrenzt einen weiteren Kabelführungsbereich zumindest teilweise. Das weitere Halteelement 91a ist dazu vorgesehen, eine Bewegung eines in dem weiteren Kabelführungsbereich geführten Kabels nach oben, insbesondere in Richtung der Oberseite der Rahmeneinheit 16a, zu begrenzen. Darüber hinaus umfasst der Kabelhalter 90a einen weiteren Befestigungsabschnitt 92a. Der weitere Befestigungsabschnitt 92a ist auf einer dem weiteren Kabelführungsbereich des Kabelhalters 90a abgewandten Seite des Kabelhalters 90a angeordnet. Der weitere Befestigungsabschnitt 92a weist dabei zumindest ein Kabelhalterbefestigungselement 170a auf. Das Kabelhalterbefestigungselement 170a ist zu dem Kabelmodulbefestigungselement 166a des Kabelmoduls 86a zumindest im Wesentlichen identisch ausgebildet. Das Kabelhalterbefestigungselement 170a ist als Verbindungsplatte und/oder Verbindungsstift ausgebildet. Das Kabelhalterbefestigungselement 170a ist zu einer Befestigung des Kabelhalters 90a an dem Modulhalter 20a, insbesondere einer der Lagerwände 74a, vorgesehen (vgl. insbesondere Figur 1 1e). Das Kabelhalterbefestigungselement 170a ist dazu vorgesehen, mit dem, insbesondere zu dem Kabelmodulbefestigungselement 166a und somit insbesondere auch zu dem Kabelhalterbefestigungselement 170a korrespondierenden, Kabelmanagerbefestigungselement 77a einer der Lagerwände 74a verbunden zu werden.

Zudem weist der weitere Befestigungsabschnitt 92a im vorliegenden Fall ein weiteres Kabelhalterbefestigungselement 172a auf. Das weitere Kabelhalterbefestigungselement 172a ist als Verbindungspin ausgebildet. Das weitere Kabelhalterbefestigungselement 172a ist zu einer Befestigung des Kabelhalters 90a an dem Modulhalter 20a, insbesondere der Lagerplatte 72a, vorgesehen. Das weitere Kabelhalterbefestigungselement 172a ist dazu vorgesehen, mit einer, insbesondere zu dem weiteren Kabelhalterbefestigungselement 172a korrespondierenden, Aufnahmevertiefung der Lagerplatte 72a verbunden zu werden. Alternativ ist jedoch auch denkbar, auf ein weiteres Kabelhalterbefestigungselement zu verzichten.

Der Kabelhalter 90a ist somit mit dem Modulhalter 20a koppelbar. Der Kabelhalter 90a ist im vorliegenden Fall werkzeuglos und insbesondere zerstörungsfrei mit dem Modulhalter 20a verbindbar und von dem Modulhalter 20a entfernbar. Somit ist der Kabelhalter 90a in zumindest einem Betriebszustand mit dem Modulhalter 20a verbunden. Dabei ist der Kabelhalter 90a zusammen mit dem Modulhalter 20a gleichförmig und gleichzeitig bewegbar.

Im vorliegenden Fall umfasst die frontseitige Kabelmanagereinheit 22a vier Kabelhalter 90a. Die Kabelhalter 90a sind zumindest im Wesentlichen identisch zueinander. Die Kabelhalter 90a sind in einem montierten Zustand jeweils zumindest im Wesentlichen zentral in einem Bereich des Aufnahmeraums der Rahmeneinheit 16a angeordnet. Im vorliegenden Fall ist jeder Lagerwand 74a jeweils eines der Kabelmodule 86a oder einer der Kabelhalter 90a zugeordnet. Dabei bilden die Kabelmodule 86a, die Kabelhalter 90a und, insbesondere hakenförmige, Kabelhalteelemente 73a der Lagerplatte 72a einen gemeinsamen Kabelführungskanal, welcher zur Führung von Kabeln und insbesondere zur Zuführung der Kabel zu dem Verbindungsbereich 14a vorgesehen ist (vgl. auch Figur 6a). Alternativ ist jedoch auch denkbar, auf zumindest ein Kabelmodul und/oder zumindest einen Kabelhalter zu verzichten. Zudem könnte eine Lagerplatte frei von Kabelhalteelementen sein. Darüber hinaus ist denkbar, auf eine frontseitige Kabelmanagereinheit vollständig zu verzichten.

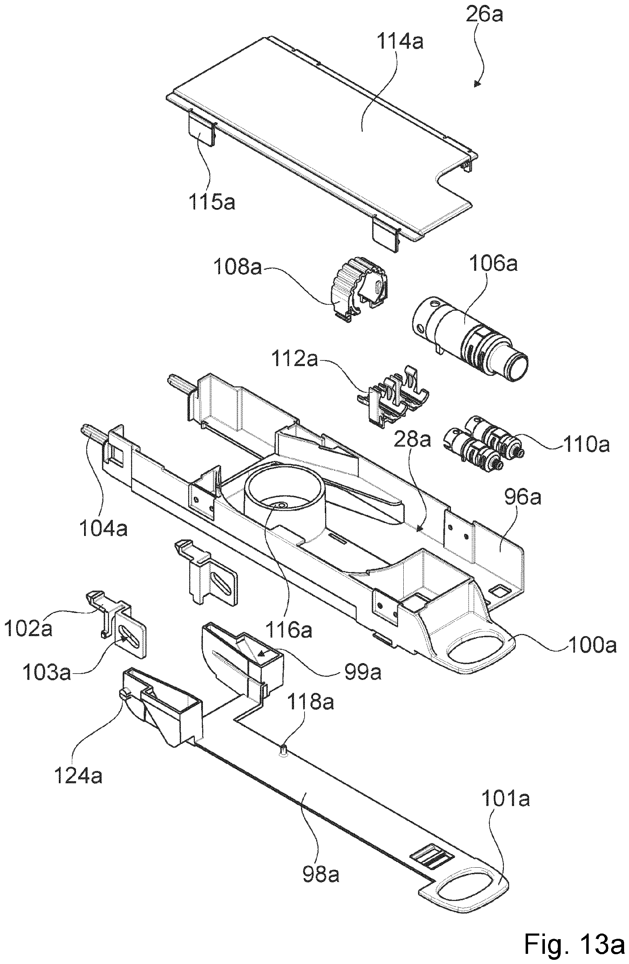

Darüber hinaus weist die Verbindungseinheit 10a zumindest eine rückseitige Kabelmanagereinheit 26a auf (vgl. insbesondere Figuren 13a bis 18b). Die zumindest eine rückseitige Kabelmanagereinheit 26a ist dabei genau einem der Verbindungsmodule 18a, 19a zugeordnet. Im vorliegenden Fall weist die Verbindungseinheit 10a somit eine Mehrzahl von rückseitigen Kabelmanagereinheiten 26a auf, welche insbesondere jeweils einem der Verbindungsmodule 18a, 19a zugeordnet sind. Die rückseitigen Kabelmanagereinheiten 26a sind in einem montierten Zustand im Bereich der Rückseite der Verbindungseinheit 10a angeordnet. Im vorliegenden Fall sind die rückseitigen Kabelmanagereinheiten 26a im montierten Zustand auf der Halteplatte 54a gelagert und/oder fixiert. Demnach sind die rückseitigen Kabelmanagereinheiten 26a im montierten Zustand unbeweglich, insbesondere bezüglich des Modulhalters 20a, und insbesondere mit der Rahmeneinheit 16a verbunden. Die rückseitigen Kabelmanagereinheiten 26a sind jeweils dazu vorgesehen, eine Vielzahl von Kabeln 12a zu führen und in zumindest einem Betriebszustand einem der Verbindungsmodule 18a, 19a zuzuführen. Die rückseitigen Kabelmanagereinheiten 26a sind dabei zumindest im Wesentlichen baugleich zueinander. Im vorliegenden Fall sind die rückseitigen Kabelmanagereinheiten 26a zumindest im Wesentlichen identisch zueinander. Alternativ ist jedoch auch denkbar, dass sich rückseitige Kabelmanagereinheiten in zumindest einem Merkmal voneinander unterscheiden und/oder auf zumindest eine der rückseitigen Kabelmanagereinheiten vollständig zu verzichten. Dabei ist insbesondere denkbar, dass eine Verbindungseinheit genau eine rückseitige Kabelmanagereinheit aufweist und/oder vollständig frei von rückseitigen Kabelmanagereinheiten ist.

Die folgende Beschreibung beschränkt sich nun auf eine der rückseitigen Kabelmanagereinheiten 26a, insbesondere die rückseitige Kabelmanagereinheit 26a, welche dem Verbindungsmodul 18a zugeordnet ist, wobei die folgende Beschreibung, insbesondere aufgrund der zumindest im Wesentlichen baugleichen Bauweise und/oder identischen Ausgestaltung der rückseitigen Kabelmanagereinheiten 26a, auch auf mögliche andere rückseitige Kabelmanagereinheiten 26a übernommen werden kann.

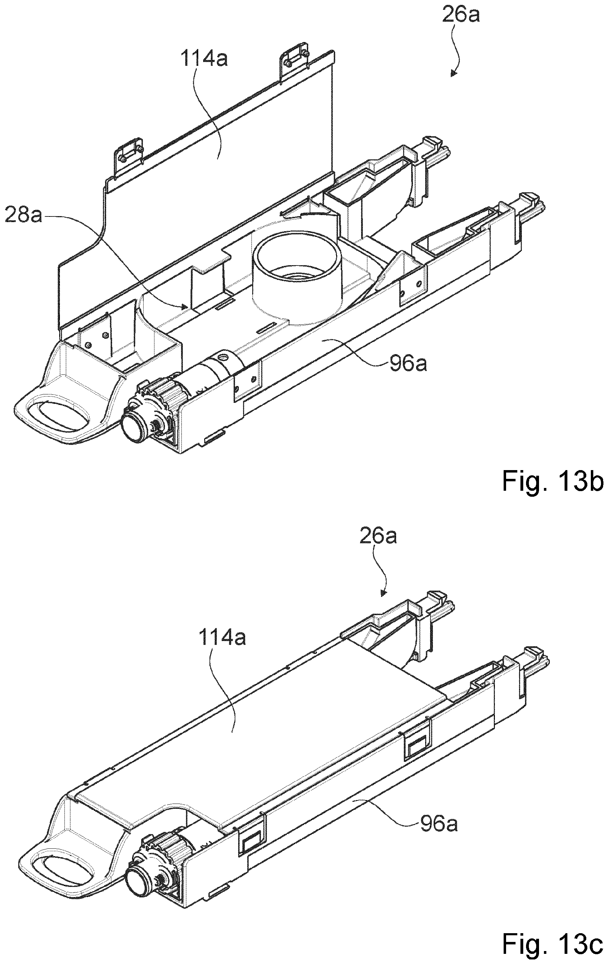

Die Figuren 13a bis 13c zeigen die rückseitige Kabelmanagereinheit 26a in einer Explosionsdarstellung (vgl. Figur 13a), in einem geöffneten montierten Zustand (vgl. Figur 13b) und in einem geschlossenen montierten Zustand (vgl. Figur 13c). Die rückseitige Kabelmanagereinheit 26a umfasst ein erstes Grundkörperteil 96a. Das erste Grundkörperteil 96a besteht im vorliegenden Fall aus einem Kunststoff. Das erste Grundkörperteil 96a ist zumindest im Wesentlichen quaderförmig ausgebildet. Das erste Grundkörperteil 96a ist in einem montierten Zustand bei einer Betrachtung senkrecht zur Haupterstreckungsebene der Deckplatten 50a zumindest im Wesentlichen rechteckig ausgebildet. Das erste Grundkörperteil 96a ist einstückig ausgebildet. Alternativ könnte ein erstes Grundkörperteil jedoch auch mehrteilig ausgebildet sein. Das erste Grundkörperteil 96a weist eine Breite auf, welche an die Breite der Verbindungsmodule 18a, 19a angepasst ist. Das erste Grundkörperteil 96a weist eine Breite von höchstens einem Fünftel der Breite der Verbindungseinheit 10a auf. Im vorliegenden Fall weist das erste Grundkörperteil 96a eine Breite von etwa 8 cm bis 8,5 cm auf. Zudem weist das erste Grundkörperteil 96a eine Höhe auf, welche an die Höhe der Verbindungsmodule 18a, 19a angepasst ist. Im vorliegenden Fall weist das erste Grundkörperteil 96a eine Höhe von etwa 3,33 cm und/oder 0,75 U auf. Das erste Grundkörperteil 96a ist als Aufnahmegehäuse ausgebildet. Das erste Grundkörperteil 96a definiert dabei einen Kabelüberlängenaufnahmebereich 28a. Der Kabelüberlängenaufnahmebereich 28a dient zu einer Aufnahme einer Kabelüberlänge zumindest eines dem Verbindungsmodul 18a zugeführten Kabels 12a. Die Kabelüberlänge wird dabei insbesondere aufgrund einer möglichen Relativbewegung zwischen dem, insbesondere relativ zu der Rahmeneinheit 16a beweglichen, Verbindungsmodul 18a und der, insbesondere relativ zu der Rahmeneinheit 16a unbeweglichen, rückseitigen Kabelmanagereinheit 26a benötigt. Im vorliegenden Fall ist der Kabelüberlängenaufnahmebereich 28a zur Aufnahme einer Vielzahl von Kabeln 12a, welche insbesondere dazu vorgesehen sind, dem Verbindungsmodul 18a zugeführt zu werden, vorgesehen. Eine Haupterstreckungslänge des Kabelüberlängenaufnahmebereichs 28a beträgt dabei zwischen 80 mm und 150 mm. Im vorliegenden Fall beträgt eine Haupterstreckungslänge des Kabelüberlängenaufnahmebereichs 28a etwa 130 mm. Zudem ist der Kabelüberlängenaufnahmebereichs 28a zur Aufrechterhaltung eines minimalen Biegeradius der Kabel 12a vorgesehen.

Ferner weist das erste Grundkörperteil 96a zumindest ein erstes Koppelelement 104a auf. Im vorliegenden Fall weist das erste Grundkörperteil 96a zwei erste Koppelelemente 104a auf. Die ersten Koppelelemente 104a sind zumindest im Wesentlichen identisch zueinander. Die ersten Koppelelemente 104a sind zumindest im Wesentlichen bolzenförmig ausgebildet. Die ersten Koppelelemente 104a sind bezüglich der Breite des ersten Grundkörperteils 96a jeweils in einem Nahbereich von sich gegenüberliegenden Seiten des ersten Grundkörperteils 96a angeordnet. Die ersten Koppelelemente 104a sind auf einer Frontseite des ersten Grundkörperteils 96a angeordnet. Zudem sind die ersten Koppelelemente 104a auf einer dem Verbindungsmodul 18a, insbesondere einer Rückseite des Verbindungsmoduls 18a, zugewandten Seite des ersten Grundkörperteils 96a angeordnet. Die ersten Koppelelemente 104a sind korrespondierend zu ersten Modulkoppelelementen 67a des Verbindungsmoduls 18a ausgebildet.

Darüber hinaus umfasst das erste Grundkörperteil 96a ein erstes Griffelement 100a. Das erste Griffelement 100a ist auf einer Rückseite des ersten Grundkörperteils 96a angeordnet. Das erste Griffelement 100a ist auf einer der Frontseite der Verbindungseinheit 10a abgewandten Seite des ersten Grundkörperteils 96a angeordnet. Zudem ist das erste Griffelement 100a auf einer dem Verbindungsmodul 18a abgewandten Seite des ersten Grundkörperteils 96a angeordnet.

Die rückseitige Kabelmanagereinheit 26a umfasst ferner ein zweites Grundkörperteil 98a. Das zweite Grundkörperteil 98a besteht im vorliegenden Fall aus einem Kunststoff. Das zweite Grundkörperteil 98a ist zumindest im Wesentlichen rechteckig ausgebildet, insbesondere bei einer Betrachtung senkrecht zu einer Haupterstreckungsebene des zweiten Grundkörperteils 98a. Das zweite Grundkörperteil 98a ist zumindest im Wesentlichen plattenartig und/oder flächig. Das zweite Grundkörperteil 98a ist zumindest im Wesentlichen streifenförmig ausgebildet. Das zweite Grundkörperteil 98a weist eine Haupterstreckungslänge auf, welche zumindest im Wesentlichen an eine Haupterstreckungslänge des ersten Grundkörperteils 96a angepasst ist. Zudem weist das zweite Grundkörperteil 98a eine mittlere Breite auf, welche wesentlich geringer als die Breite des ersten Grundkörperteils 96a ist.

Zudem weist das zweite Grundkörperteil 98a zumindest einen Koppelelementaufnahmeraum 99a auf. Im vorliegenden Fall weist das zweite Grundkörperteil 98a zwei Koppelelementaufnahmeräume 99a auf. Die Koppelelementaufnahmeräume 99a sind zumindest im Wesentlichen identisch zueinander. Die Koppelelementaufnahmeräume 99a sind auf einer Frontseite des zweiten Grundkörperteils 98a angeordnet. Zudem sind die Koppelelementaufnahmeräume 99a auf einer dem Verbindungsmodul 18a, insbesondere der Rückseite des Verbindungsmoduls 18a, zugewandten Seite des zweiten Grundkörperteils 98a angeordnet.

Darüber hinaus umfasst das zweite Grundkörperteil 98a ein zweites Griffelement 101a. Das zweite Griffelement 101a ist auf einer Rückseite des zweiten Grundkörperteils 98a angeordnet. Das zweite Griffelement 101a ist auf einer der Frontseite der Verbindungseinheit 10a abgewandten Seite des zweiten Grundkörperteils 98a angeordnet. Zudem ist das zweite Griffelement 101a auf einer dem Verbindungsmodul 18a abgewandten Seite des zweiten Grundkörperteils 98a angeordnet. Das zweite Griffelement 101a ist dabei korrespondierend zu dem ersten Griffelement 100a ausgebildet.

Das zweite Grundkörperteil 98a ist in einem montierten Zustand an einer Unterseite des ersten Grundkörperteils 96a angeordnet. Die Griffelemente 100a, 101a sind dabei übereinander angeordnet und bilden insbesondere einen gemeinsamen Griffbereich aus. Im vorliegenden Fall sind das zweite Grundkörperteil 98a und das erste Grundkörperteil 96a ferner in zumindest einem Betriebszustand relativ zueinander beweglich, insbesondere linear beweglich, insbesondere in eine Montage- und/oder Demontagerichtung der rückseitigen Kabelmanagereinheit 26a.

Darüber hinaus umfasst die rückseitige Kabelmanagereinheit 26a zumindest ein zweites Koppelelement 102a. Im vorliegenden Fall umfasst die rückseitige Kabelmanagereinheit 26a zwei zweite Koppelelemente 102a. Die zweiten Koppelelemente 102a sind zumindest im Wesentlichen identisch zueinander. Die zweiten Koppelelemente 102a sind zumindest im Wesentlichen hakenförmig ausgebildet. In einem montierten Zustand ist jeweils eines der zweiten Koppelelemente 102a, insbesondere beweglich, in einem der Koppelelementaufnahmeräume 99a angeordnet. Die zweiten Koppelelemente 102a sind in einem Bereich der ersten Koppelelemente 104a angeordnet. Die zweiten Koppelelemente 102a sind korrespondierend zu zweiten Modulkoppelelementen 69a des Verbindungsmoduls 18a ausgebildet. Die zweiten Koppelelemente 102a sind ferner beweglich relativ zu dem zweiten Grundkörperteil 98a gelagert.

Zu einer, insbesondere definierten, Bewegung der zweiten Koppelelemente 102a, umfasst das zweite Grundkörperteil 98a zumindest ein Führungselement 124a. Im vorliegenden Fall umfasst das zweite Grundkörperteil 98a zwei Führungselemente 124a, wobei jeweils eines der Führungselemente 124a einem der zweiten Koppelelemente 102a zugeordnet ist. Die Führungselemente 124a sind zumindest im Wesentlichen bolzenförmig ausgebildet. Die Führungselemente 124a greifen dabei in einem montierten Zustand, insbesondere zumindest teilweise formschlüssig, in Führungskulissen 103a, insbesondere Führungsausnehmungen, der zweiten Koppelelemente 102a ein.

Die rückseitige Kabelmanagereinheit 26a umfasst ferner eine Grundkörperabdeckung 114a. Die Grundkörperabdeckung 114a ist zumindest im Wesentlichen rechteckig ausgebildet, insbesondere bei einer Betrachtung senkrecht zu einer Haupterstreckungsebene der Grundkörperabdeckung 114a. Die Grundkörperabdeckung 114a ist zumindest im Wesentlichen plattenförmig. Die Grundkörperabdeckung 114a bildet und/oder definiert eine Oberseite der rückseitigen Kabelmanagereinheit 26a. Die Grundkörperabdeckung 114a begrenzt somit die Höhe der rückseitigen Kabelmanagereinheit 26a. Die Grundkörperabdeckung 114a ist dazu vorgesehen, das erste Grundkörperteil 96a und insbesondere den Kabelüberlängenaufnahmebereich 28a nach oben, im montierten Zustand insbesondere in Richtung der Oberseite der Rahmeneinheit 16a, abzuschließen. Die Grundkörperabdeckung 114a kann dabei mittels einer beliebigen Befestigungsmethode mit dem ersten Grundkörperteil 96a gekoppelt werden. Im vorliegenden Fall umfasst die Grundkörperabdeckung 114a zur Verbindung mit dem ersten Grundkörperteil 96a mehrere, insbesondere mittels eines Filmscharniers verschwenkbare, Verschlusselemente 115a. Alternativ ist jedoch auch denkbar, eine Grundkörperabdeckung beliebig anders auszugestalten und/oder auf eine Grundkörperabdeckung vollständig zu verzichten.

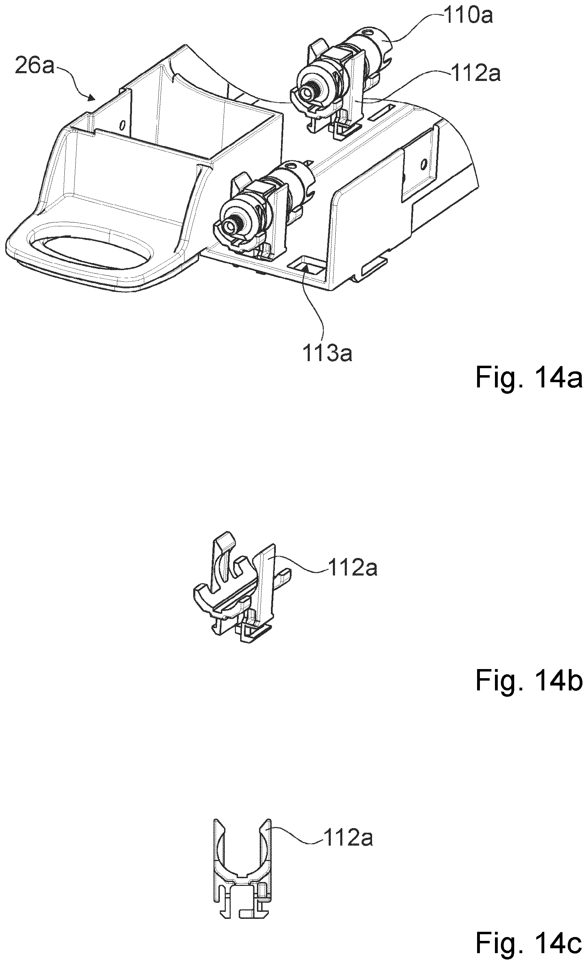

Darüber hinaus ist die rückseitige Kabelmanagereinheit 26a modular aufgebaut. Die rückseitige Kabelmanagereinheit 26a kann dabei mehrere unterschiedliche Kabelkomponenten 106a, 110a, wie beispielsweise Zugentlastungselemente und/oder Kabelaufteiler, und/oder mehrere unterschiedliche Komponentenhalterungen 108a, 112a aufweisen (vgl. insbesondere Figuren 14a bis 15c). Die Kabelkomponenten 106a, 110a und/oder die Komponentenhalterungen 108a, 112a sind abhängig von einem Einsatzzweck der rückseitigen Kabelmanagereinheit 26a, insbesondere abhängig von einem verwendeten Kabeltyp, und/oder einem Einsatzzweck des Verbindungsmoduls 18a, aus einer Gruppe 156, 158 von Kabelkomponenten 106a, 110a und/oder Komponentenhalterungen 108a, 112a auswählbar.

Die Kabelkomponenten 106a, 110a können beispielsweise zur Vermeidung von Zugspannungen und/oder zur Aufteilung von in den Kabelüberlängenaufnahmebereich 28a eingeführten Kabeln 12a vorgesehen sein. Die Komponentenhalterungen 108a, 112a sind zur Halterung der Kabelkomponenten 106a, 110a vorgesehen. Die Komponentenhalterungen 108a, 112a sind dabei mit zumindest einer, insbesondere standardisierten und/oder genormten, insbesondere quadratischen, Halteausnehmung 113a des ersten Grundkörperteils 96a verbindbar. In einem montierten Zustand sind die Kabelkomponenten 106a, 110a und die Komponentenhalterungen 108a, 112a auf der Rückseite des ersten Grundkörperteils 96a angeordnet. Zudem sind die die Kabelkomponenten 106a, 110a und die Komponentenhalterungen 108a, 112a in einem Nahbereich des von den Griffelementen 100a, 101a gebildeten, Griffbereichs angeordnet.

Die Figuren 14a bis 14c zeigen dabei eine erste Kabelkomponente 110a der Kabelkomponenten 106a, 110a und eine korrespondierende erste Komponentenhalterung 112a der Komponentenhalterungen 108a, 112a. Die erste Kabelkomponente 110a ist als Kabelaufteiler, insbesondere des Typs D12, ausgebildet.

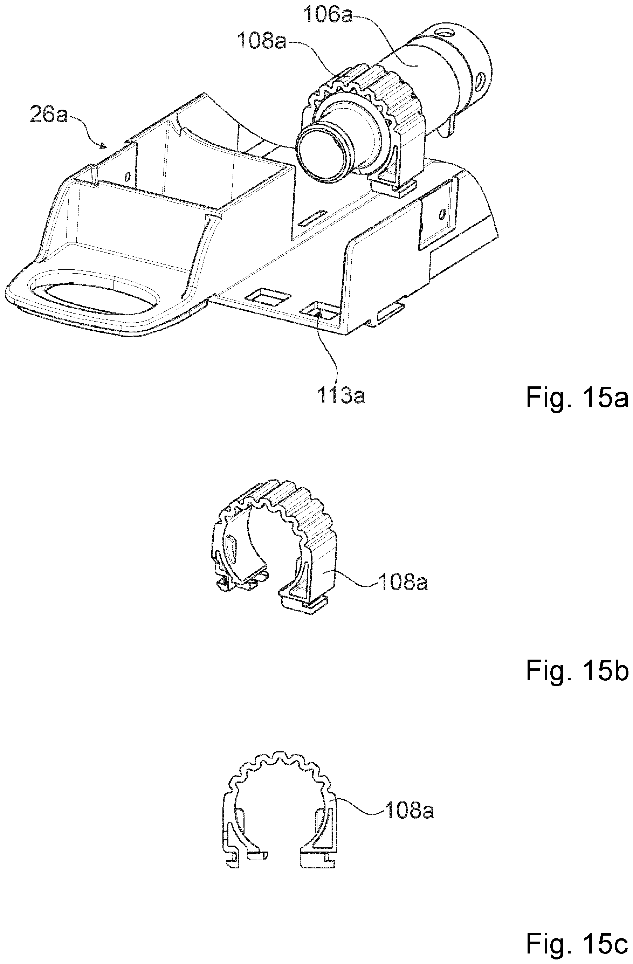

Die Figuren 15a bis 15c zeigen eine zweite Kabelkomponente 106a der Kabelkomponenten 106a, 110a und eine korrespondierende zweite Komponentenhalterung 108a der Komponentenhalterungen 108a, 112a. Die zweite Kabelkomponente 106a ist als Kabelaufteiler, insbesondere des Typs D23, ausgebildet.

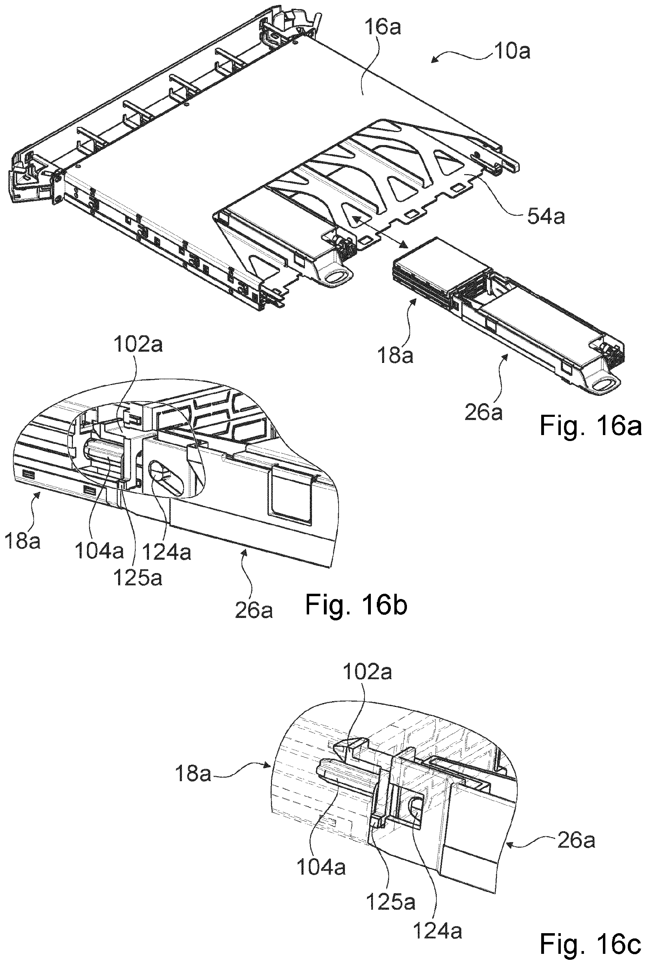

Im vorliegenden Fall ist die rückseitige Kabelmanagereinheit 26a ferner zu einer rückseitigen Montage und zu einer rückseitigen Demontage des Verbindungsmoduls 18a, insbesondere in einem der Modulaufnahmebereiche des Modulhalters 20a, mit dem Verbindungsmodul 18a koppelbar (vgl. insbesondere Figuren 16a bis 18b).

Zur Kopplung der rückseitigen Kabelmanagereinheit 26a mit dem Verbindungsmodul 18a wird die Rückseite des Verbindungsmoduls 18a mit einer Frontseite der rückseitigen Kabelmanagereinheit 26a verbunden. Dabei koppeln die ersten Koppelelemente 104a mit den ersten Modulkoppelelementen 67a (vgl. insbesondere Figuren 16b bis 16e). Im vorliegenden Fall greifen die ersten Koppelelemente 104a in die ersten Modulkoppelelemente 67a ein. Die ersten Koppelelemente 104a und die ersten Modulkoppelelemente 67a sind zumindest im Wesentlichen zu einer Ausrichtung der rückseitigen Kabelmanagereinheit 26a relativ zu dem Verbindungsmodul 18a vorgesehen. Zudem koppeln die zweiten Koppelelemente 102a mit den zweiten Modulkoppelelementen 69a (vgl. insbesondere Figuren 16b bis 16e). Im vorliegenden Fall greifen die zweiten Koppelelemente 102a in die zweiten Modulkoppelelemente 69a ein. Die zweiten Koppelelemente 104a und die zweiten Modulkoppelelemente 69a sind dabei zumindest im Wesentlichen zu einer, insbesondere festen, Verbindung und/oder Fixierung der rückseitigen Kabelmanagereinheit 26a und des Verbindungsmoduls 18a vorgesehen.

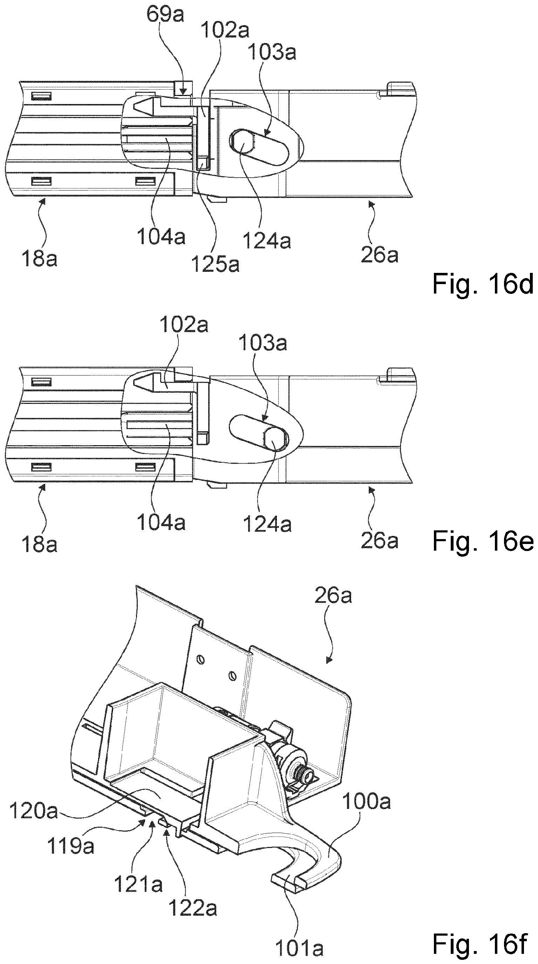

Die zweiten Koppelelemente 102a sind ferner, wie insbesondere bereits erwähnt, beweglich gelagert. Im vorliegenden Fall sind die zweiten Koppelelemente 102a jeweils in eine, zu einer Haupterstreckungsebene des Verbindungsmoduls 18a und/oder der rückseitigen Kabelmanagereinheit 26a, senkrechte Richtung beweglich. Die zweiten Koppelelemente 102a können dabei jeweils zwei, insbesondere voneinander verschiedene, Positionen, insbesondere eine erste Position und eine zweite Position, annehmen (vgl. insbesondere Figuren 16d und 16e). Im vorliegenden Fall sind die zweiten Koppelelemente 102a mittels einer, insbesondere linearen, Bewegung des zweiten Grundkörperteils 98a relativ zu dem ersten Grundkörperteil 96a, insbesondere in Montagerichtung und/oder Demontagerichtung und insbesondere in eine zu der Bewegungsrichtung der zweiten Koppelelemente 102a senkrechte Richtung, von der ersten Position in die zweite Position und umgekehrt bewegbar und/oder überführbar. Die Bewegung des zweiten Grundkörperteils 98a relativ zu dem ersten Grundkörperteil 96a führt dabei zu einer Bewegung der Führungselemente 124a in den Führungskulissen 103a. Da Erstreckungsrichtungen der Führungskulissen 103a jeweils einen Winkel, im vorliegenden Fall jeweils etwa 30° bis 40°, mit einer Bewegungsrichtung des zweiten Grundkörperteils 98a einschließen, führt die Bewegung des zweiten Grundkörperteils 98a zu einer Positionsänderung der zweiten Koppelelemente 102a. Die Relativbewegung der Grundkörperteile 96a, 98a kann dabei bei zumindest einem Koppelvorgang durch einen Benutzer und/oder Bediener mittels des ersten Griffelements 100a und/oder des zweiten Griffelements 101a ausgelöst werden.

Die erste Position der zweiten Koppelelemente 102a entspricht einer Verbindungsposition (vgl. insbesondere Figur 16d). In der ersten Position sind die rückseitige Kabelmanagereinheit 26a und das Verbindungsmodul 18a miteinander verbindbar. Die, insbesondere bei einer seitlichen Betrachtung und/oder senkrechten Betrachtung der Modulwand 57a des Verbindungsmoduls 18a im Vergleich zu der ersten Position höherliegende, zweite Position der zweiten Koppelelemente 102a entspricht einer Halteposition (vgl. insbesondere Figur 16e). In der zweiten Position sind die rückseitige Kabelmanagereinheit 26a und das Verbindungsmodul 18a fest miteinander verbunden. Die zweite Position entspricht dabei einer Montage- und/oder Demontageposition, in welcher das Verbindungsmodul 18a mittels einer rückseitigen Montage und/oder Demontage in dem Modulhalter 20a montierbar und/oder demontierbar ist. Alternativ ist auch denkbar, dass eine rückseitige Kabelmanagereinheit unterschiedlich ausgebildete erste und/oder zweite Koppelelemente aufweisen könnte und/oder zumindest eines der ersten Koppelelemente und/oder zumindest eines der zweiten Koppelelemente als Ausnehmung ausgebildet sein könnte. Auch ist denkbar, auf erste Koppelelemente vollständig zu verzichten.

Darüber hinaus weist die rückseitige Kabelmanagereinheit 26a eine Sicherungseinheit 119a auf (vgl. insbesondere Figur 16f). Die Sicherungseinheit 119a ist dazu vorgesehen, in zumindest einem Betriebszustand eine Bewegung des zweiten Grundkörperteils 98a relativ zu dem ersten Grundkörperteil 96a, insbesondere zumindest ohne externe Kraftbeaufschlagung, zu verhindern. Die Sicherungseinheit 119a ist dabei dazu vorgesehen, zumindest in der zweiten Position der zweiten Koppelelemente 102a eine Bewegung des zweiten Grundkörperteils 98a relativ zu dem ersten Grundkörperteil 96a, insbesondere zumindest ohne externe Kraftbeaufschlagung, zu verhindern und damit insbesondere die zweiten Koppelelemente 102a in der zweiten Position, insbesondere Halteposition, zumindest temporär zu sichern, insbesondere zu halten und/oder zu fixieren, wodurch insbesondere eine sichere Verbindung zwischen der rückseitigen Kabelmanagereinheit 26a und dem Verbindungsmodul 18a erreicht werden kann. Zudem ist die Sicherungseinheit 119a im vorliegenden Fall auch dazu vorgesehen, in der ersten Position der zweiten Koppelelemente 102a eine Bewegung des zweiten Grundkörperteils 98a relativ zu dem ersten Grundkörperteil 96a, insbesondere zumindest ohne externe Kraftbeaufschlagung, zu verhindern, wodurch vorteilhaft ein Verschieben der Grundkörperteile 96a, 98a relativ zueinander auch in einem unverbundenen Zustand verhindert werden kann. Alternativ ist jedoch auch denkbar, auf eine Sicherung in einer ersten Position von zweiten Koppelelementen zu verzichten.

Dazu umfasst die Sicherungseinheit 119a ein erstes Sicherungselement 120a. Das erste Sicherungselement 120a ist als, insbesondere selbstauslösendes, Rastelement, insbesondere Rasthaken, ausgebildet. Das erste Sicherungselement 120a ist an der Unterseite des ersten Grundkörperteils 96a angeordnet. Zudem umfasst die Sicherungseinheit 119a ein zweites Sicherungselement 121a. Das zweite Sicherungselement 121a ist zu dem ersten Sicherungselement 120a korrespondierend ausgebildet. Das zweite Sicherungselement 121a ist als, insbesondere selbstauslösendes, Rastelement, insbesondere Rastausnehmung, ausgebildet. Das zweite Sicherungselement 121a ist an dem zweiten Grundkörperteil 98a angeordnet. Zudem umfasst die Sicherungseinheit 119a im vorliegenden Fall ein drittes Sicherungselement 122a. Das dritte Sicherungselement 122a ist zu dem ersten Sicherungselement 120a korrespondierend ausgebildet. Das dritte Sicherungselement 122a ist als, insbesondere selbstauslösendes, Rastelement, insbesondere Rastausnehmung, ausgebildet. Das dritte Sicherungselement 122a ist an dem zweiten Grundkörperteil 98a angeordnet. Das dritte Sicherungselement 122a ist zumindest im Wesentlichen identisch zu dem zweiten Sicherungselement 121a ausgebildet.

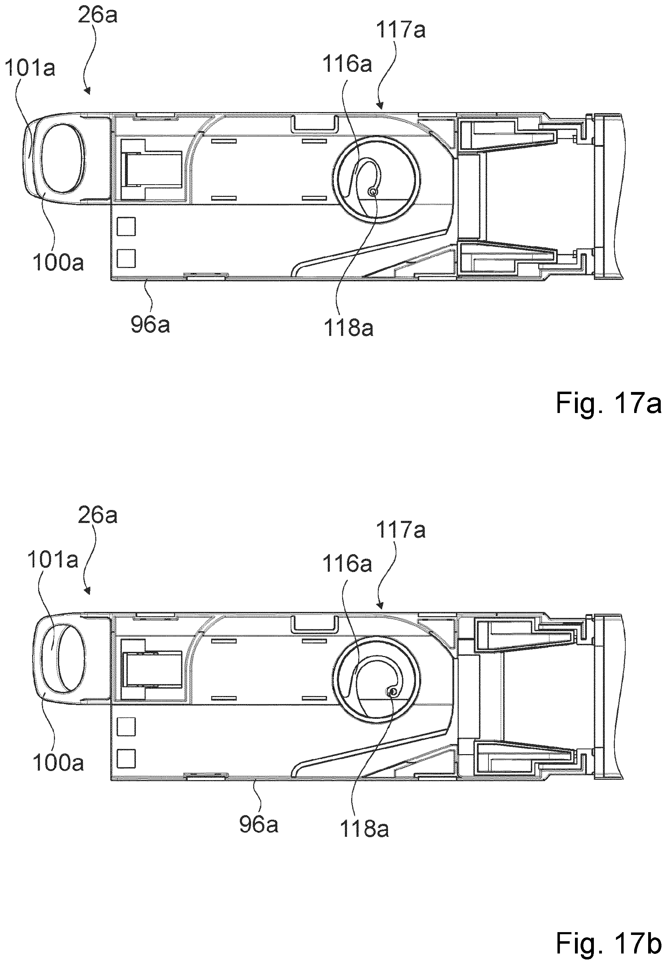

Sind das erste Sicherungselement 120a und das dritte Sicherungselement 122a miteinander verrastet, sind die zweiten Koppelelemente 102a in der ersten Position fixiert. Dabei ist eine Relativbewegung zwischen den Grundkörperteilen 96a, 98a, zumindest ohne externe Kraftbeaufschlagung verhindert. Zudem sind Griffausnehmungen der Griffelemente 100a, 101a in diesem Zustand bei einer Betrachtung senkrecht zur Haupterstreckungsebene des Verbindungsmoduls 18a und/oder der rückseitigen Kabelmanagereinheit 26a versetzt zueinander angeordnet (vgl. beispielsweise Figur 17b).

Die Verrastung des ersten Sicherungselements 120a und des dritten Sicherungselements 122a kann jedoch durch einen Benutzer und/oder Bediener mittels des ersten Griffelements 100a und/oder des zweiten Griffelements 101a gelöst werden, wodurch die zweiten Koppelelemente 102a in die zweite Position bewegbar sind.

Befinden sich die zweiten Koppelelemente 102a in der zweiten Position sind das erste Sicherungselement 120a und das zweite Sicherungselement 121a miteinander verrastet. Hierdurch sind die zweiten Koppelelemente 102a in der zweiten Position fixiert. Dabei ist eine Relativbewegung zwischen den Grundkörperteilen 96a, 98a, zumindest ohne externe Kraftbeaufschlagung verhindert. Zudem sind die Griffausnehmungen der Griffelemente 100a, 101a in diesem Zustand bei einer Betrachtung senkrecht zur Haupterstreckungsebene des Verbindungsmoduls 18a und/oder der rückseitigen Kabelmanagereinheit 26a deckungsgleich miteinander (vgl. beispielsweise Figur 17a). In diesem Zustand kann das Verbindungsmodul 18a mittels der rückseitigen Kabelmanagereinheit 26a und einer insbesondere linearen Bewegung, insbesondere in Montage- und/oder Demontagerichtung, rückseitig in dem Modulhalter 20a montiert werden (vgl. insbesondere Figur 16a). In einem montierten Zustand ist das Verbindungsmodul 18a dann in dem Modulhalter 20a, insbesondere zwischen zwei Lagerwänden 74a eingerastet.

Da das Verbindungsmodul 18a im montierten Zustand relativ zu der rückseitigen Kabelmanagereinheit 26a beweglich ist, muss im montierten Zustand und/oder bei einem Montagevorgang des Verbindungsmoduls 18a, die feste Verbindung zwischen der rückseitigen Kabelmanagereinheit 26a und dem Verbindungsmodul 18a wieder gelöst werden. Dabei muss insbesondere die durch die Sicherungseinheit 119a hergestellte Verrastung des ersten Sicherungselements 120a und des zweiten Sicherungselements 121a gelöst und die zweiten Koppelelemente 102a in die erste Position zurück bewegt werden. Im vorliegenden Fall erfolgt eine Trennung der Verbindung zwischen der rückseitigen Kabelmanagereinheit 26a und dem Verbindungsmodul 18a beim Montagevorgang selbsttätig und/oder automatisch.

Dazu umfasst die rückseitige Kabelmanagereinheit 26a zumindest eine Entsicherungseinheit 117a (vgl. insbesondere Figuren 17a und 17b). Figur 17a zeigt dabei einen Zustand, in welchem das erste Sicherungselement 120a und das zweite Sicherungselement 121a miteinander verrastet sind und die zweiten Koppelelemente 102a somit in der zweiten Position fixiert sind. Figur 17b zeigt einen Zustand, in welchem das erste Sicherungselement 120a und das dritte Sicherungselement 122a miteinander verrastet sind und die zweiten Koppelelemente 102a somit in der ersten Position fixiert sind. Die Entsicherungseinheit 117a umfasst ein erstes Entsicherungselement 116a. Das erste Entsicherungselement 116a ist als, insbesondere federelastisches, Rückstellelement ausgebildet. Das erste Entsicherungselement 116a ist zumindest teilweise spiralförmig ausgebildet. Das erste Entsicherungselement 116a ist an der Unterseite des ersten Grundkörperteils 96a angeordnet. Zudem umfasst die Entsicherungseinheit 117a ein zweites Entsicherungselement 118a. Das zweite Entsicherungselement 118a ist als Verbindungspin ausgebildet. Das zweite Entsicherungselement 118a ist an dem zweiten Grundkörperteil 98a angeordnet. Das zweite Entsicherungselement 118a weist eine Wirkverbindung mit dem ersten Entsicherungselement 116a auf. Im vorliegenden Fall ist das zweite Entsicherungselement 118a unmittelbar mit dem ersten Entsicherungselement 116a verbunden. Das erste Entsicherungselement 116a ist dazu vorgesehen, in zumindest einem Betriebszustand eine Rückstellkraft auf das zweite Entsicherungselement 118a auszuüben. Sind das erste Sicherungselement 120a und das dritte Sicherungselement 122a miteinander verrastet und die zweiten Koppelelemente 102a somit in der ersten Position fixiert, befindet sich das erste Entsicherungselement 116a in einem entspannten Zustand. Dabei ist eine von dem ersten Entsicherungselement 116a auf das zweite Entsicherungselement 118a ausgeübte Rückstellkraft minimal.

Sind das erste Sicherungselement 120a und das zweite Sicherungselement 121a miteinander verrastet und die zweiten Koppelelemente 102a somit in der zweiten Position fixiert, befindet sich das erste Entsicherungselement 116a in einem angespannten Zustand. Dabei ist eine von dem ersten Entsicherungselement 116a auf das zweite Entsicherungselement 118a ausgeübte Rückstellkraft maximal. Wird nun das Verbindungsmodul 18a in diesem Zustand mittels der rückseitigen Kabelmanagereinheit 26a und einer insbesondere linearen Bewegung, insbesondere in Montage- und/oder Demontagerichtung, rückseitig in dem Modulhalter 20a montiert, so wird das erste Sicherungselement 120a durch die Halteplatte 54a entgegen einer Sicherungsrichtung ausgelenkt. In diesem ausgelenkten Zustand wird das erste Sicherungselement 120a mittels der Rückstellkraft des ersten Entsicherungselements 116a in Richtung des dritten Sicherungselements 122a geführt bis das erste Sicherungselement 120a mit dem dritten Sicherungselement 122a verrastet. Hierdurch bewegen sich die zweiten Koppelelemente 102a in die erste Position zurück, wodurch die feste Verbindung zwischen der rückseitigen Kabelmanagereinheit 26a und dem Verbindungsmodul 18a gelöst wird. Somit ist das Verbindungsmodul 18a im montierten Zustand relativ zu der rückseitigen Kabelmanagereinheit 26a beweglich.

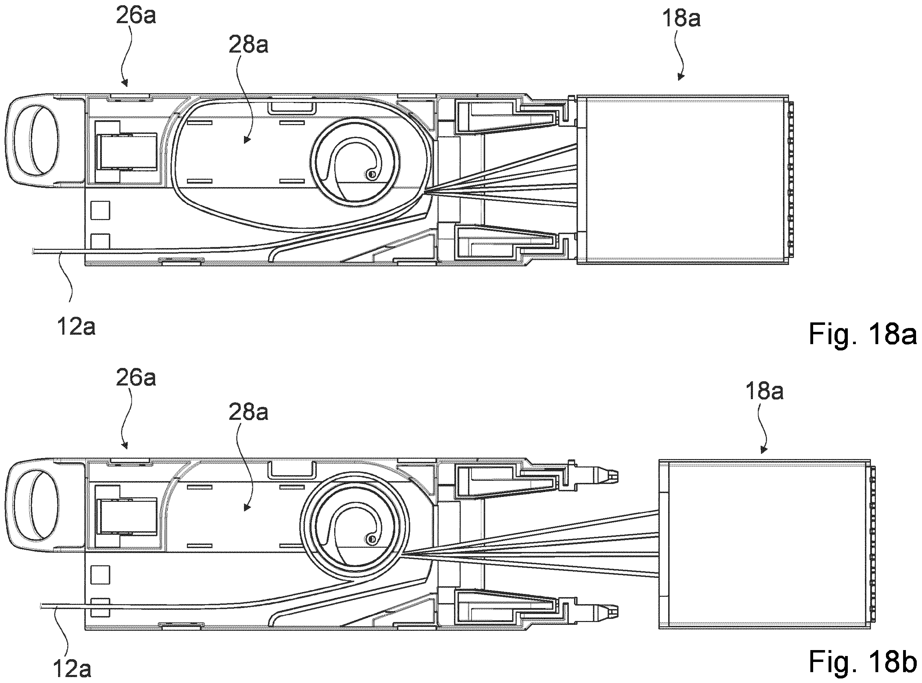

Die Figuren 18a und 18b zeigen eine derartige Relativbewegung zwischen dem Verbindungsmodul 18a und der rückseitigen Kabelmanagereinheit 26a, insbesondere in einem Zustand, in welchem dem Verbindungsmodul 18a mehrere Kabel 12a zugeführt sind. Figur 18a zeigt das Verbindungsmodul 18a in der Aufbewahrungsposition und Figur 18b das Verbindungsmodul 18a in der Bearbeitungsposition. Dabei ist der Kabelüberlängenaufnahmebereich 28a zur Aufrechterhaltung eines minimalen Biegeradius der Kabel 12a, im vorliegenden Fall insbesondere von 44 mm, vorgesehen.

Wie bereits erwähnt, wird das Verbindungsmodul 18a im montierten Zustand durch eine Rastverbindung in dem jeweiligen Modulaufnahmebereich gehalten, wobei eine dem jeweiligen Modulaufnahmebereich zugeordnete Lagerwand 74a zumindest ein Rastelement 76a und zumindest ein weiteres Rastelement 75a aufweist, welche insbesondere dazu vorgesehen sind, eine Bewegung des Verbindungsmoduls 18a zu verhindern (vgl. auch Figuren 6a und 6b).

Zu einer rückseitigen Demontage des Verbindungsmoduls 18a muss sich das Verbindungsmodul 18a in der Aufbewahrungsposition befinden. Zudem muss die Rastverbindung, insbesondere zumindest das weitere Rastelement 75a, gelöst werden und die zweiten Koppelelemente 102a in die zweite Position bewegt werden, insbesondere um das Verbindungsmodul 18a zusammen mit der rückseitigen Kabelmanagereinheit 26a aus dem Modulhalter 20a zu entfernen. Dazu weist die rückseitige Kabelmanagereinheit 26a eine Entriegelungseinheit auf. Die Entriegelungseinheit umfasst zumindest ein Entriegelungselement 125a (vgl. Figuren 16b bis 16e). Im vorliegenden Fall umfasst die Entriegelungseinheit zwei Entriegelungselemente 125a. Die Entriegelungselemente 125a sind zumindest im Wesentlichen identisch zueinander. Die Entriegelungselemente 125a sind zumindest im Wesentlichen bolzenförmig ausgebildet. Die Entriegelungselemente 125a sind jeweils in einem Nahbereich zweier gegenüberliegender und unmittelbar benachbarter Lagerwände 74a angeordnet. Die Entriegelungselemente 125a sind in einem Nahbereich der Frontseite des ersten Grundkörperteils 96a und/oder des zweiten Grundkörperteils 98a angeordnet. Im vorliegenden Fall ist je eines der Entriegelungselemente 125a einstückig mit jeweils einem der zweiten Koppelelemente 102a verbunden. Die Entriegelungselemente 125a sind somit, insbesondere gleichzeitig und gleichförmig, mit den zweiten Koppelelementen 102a beweglich. Die Entriegelungselemente 125a sind jeweils dazu vorgesehen, das weitere Rastelement 75a einer Lagerwand 74a zu lösen. Bei einer, insbesondere durch einen Benutzer und/oder Bediener mittels des ersten Griffelements 100a und/oder des zweiten Griffelements 101a initiierten, Bewegung der zweiten Koppelelemente 102a in die zweite Position, drücken die Entriegelungselemente 125a dabei gegen das weitere Rastelement 75a und lösen hierdurch die Rastverbindung zwischen dem Verbindungsmodul 18a und der jeweiligen Lagerwand 74a zumindest teilweise und insbesondere zumindest derart, dass das Verbindungsmodul 18a mittels der rückseitigen Kabelmanagereinheit 26a entfernt werden kann.

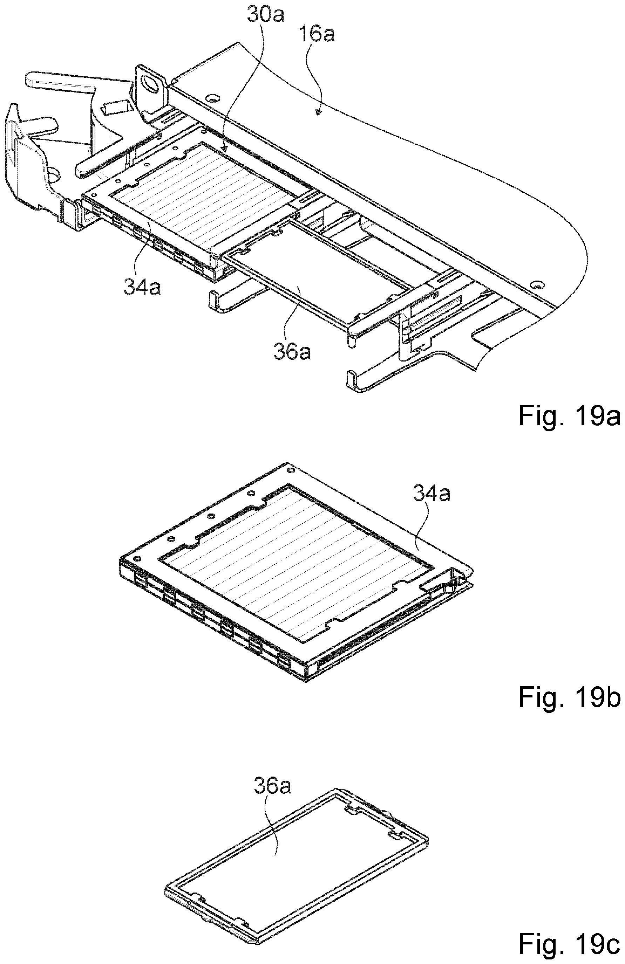

Weiterhin weist die Verbindungseinheit 10a mehrere, von einem Verbindungsmodul 18a, 19a, einer frontseitigen Kabelmanagereinheit 22a, einer rückseitigen Kabelmanagereinheit 26a und einem Schutzelement 24a verschieden ausgebildete, Funktionseinheiten 34a, 36a, 38a sowie zumindest einen Funktionseinheitenaufnahmebereich 30a, 32a, insbesondere für die Funktionseinheiten 34a, 36a, 38a, auf (vgl. insbesondere Figuren 19a bis 20c). Im vorliegenden Fall weist die Verbindungseinheit 10a mehrere Funktionseinheitenaufnahmebereiche 30a, 32a auf. Die Funktionseinheitenaufnahmebereiche 30a, 32a sind den Verbindungsmodulen 18a, 19a zugeordnet. Die Funktionseinheitenaufnahmebereiche 30a, 32a sind dazu vorgesehen, die Funktionseinheiten 34a, 36a, 38a aufzunehmen. Im vorliegenden Fall weist die Verbindungseinheit 10a zumindest zwei wesentlich verschiedene Funktionseinheitenaufnahmebereiche 30a, 32a auf.

Ein erster Funktionseinheitenaufnahmebereich 30a der Funktionseinheitenaufnahmebereiche 30a, 32a ist im Bereich der Frontseite der Verbindungseinheit 10a angeordnet (vgl. insbesondere Figuren 19a bis 19c). Der erste Funktionseinheitenaufnahmebereich 30a ist zur Aufnahme von als Anzeigeeinheiten ausgebildeten Funktionseinheiten 34a, 36a vorgesehen.

Figur 19b zeigt dabei eine erste als Anzeigeeinheit ausgebildete Funktionseinheit 34a der Funktionseinheiten 34a, 36a, 38a. Die erste Funktionseinheit 34a ist zur Anzeige zumindest eines Signals der Funktionsüberwachungseinheit vorgesehen, welche insbesondere in einem der Verbindungsmodule 18a, 19a verbaut sein kann. Die erste Funktionseinheit 34a ist als Lichtleitereinheit ausgebildet und umfasst mehrere Lichtleiter. Zusätzlich ist die erste Funktionseinheit 34a als Kabelmanager und/oder als Etikettenhalter verwendbar.

Figur 19c zeigt eine zweite als Anzeigeeinheit ausgebildete Funktionseinheit 36a der Funktionseinheiten 34a, 36a, 38a. Die zweite Funktionseinheit 36a ist dabei als Etikettenhalter ausgebildet.

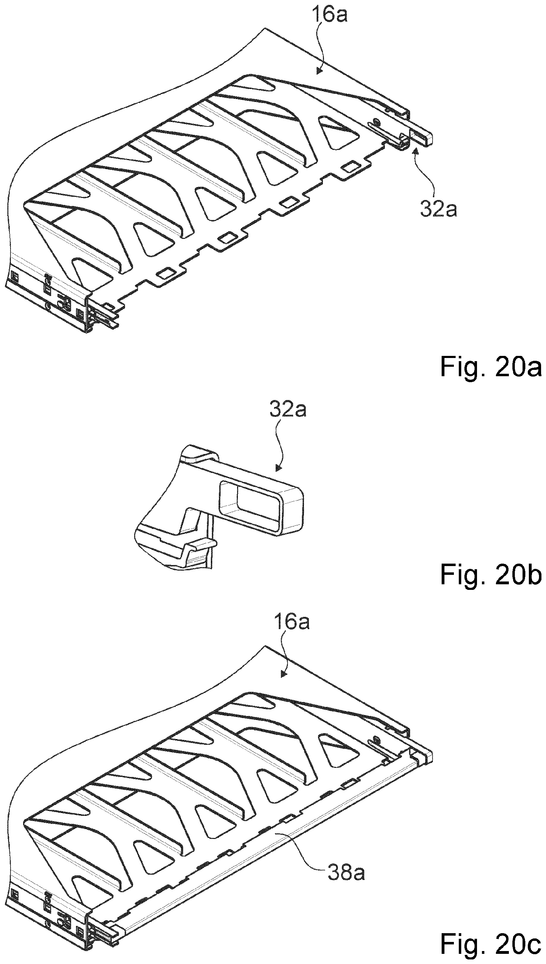

Ein zweiter Funktionseinheitenaufnahmebereich 32a der Funktionseinheitenaufnahmebereiche 30a, 32a ist im Bereich der Rückseite der Verbindungseinheit 10a angeordnet (vgl. insbesondere Figuren 20a bis 20c). Der zweite Funktionseinheitenaufnahmebereich 32a ist zur Aufnahme einer als Steuereinheit ausgebildeten Funktionseinheit 38 vorgesehen.

Figur 20c zeigt dabei eine dritte als Steuereinheit ausgebildete Funktionseinheit 38a der Funktionseinheiten 34a, 36a, 38a. Die dritte Funktionseinheit 38a ist zur Steuerung der Funktionsüberwachungseinheit vorgesehen, welche insbesondere in einem der Verbindungsmodule 18a, 19a verbaut sein kann.

Alternativ ist jedoch auch denkbar, auf zusätzliche Funktionseinheiten und/oder Funktionseinheitenaufnahmebereiche zu verzichten und/oder weitere Funktionseinheiten und/oder Funktionseinheitenaufnahmebereiche vorzusehen.

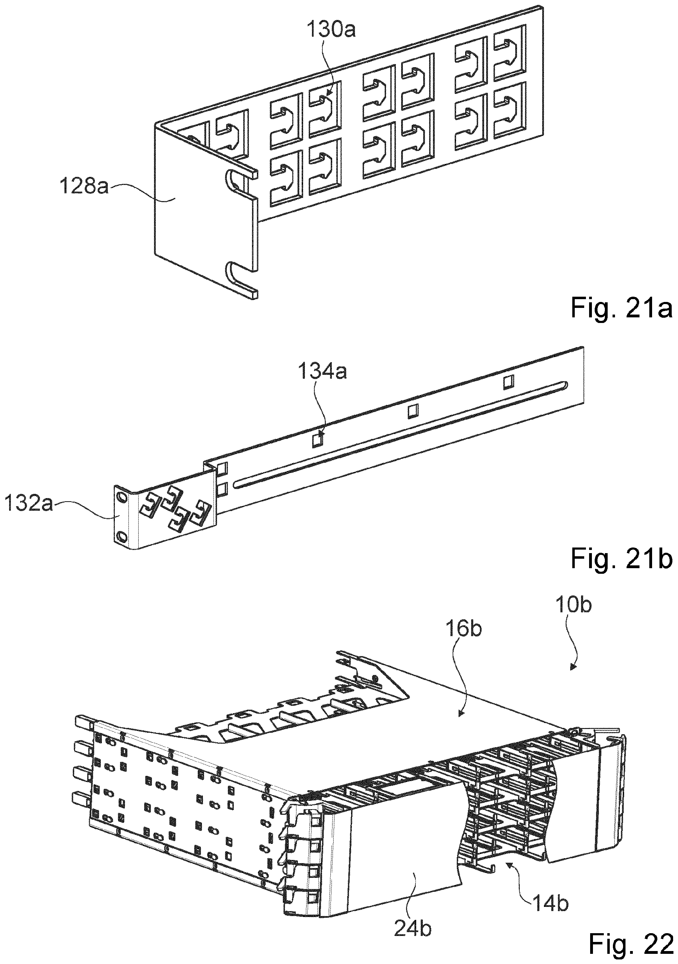

Insbesondere um eine besonders sichere Befestigung der Verbindungseinheit 10a an der Trägereinheit zu gewährleisten, weist die Rangierfeldvorrichtung zumindest ein Befestigungselement 128a, 132a auf (vgl. insbesondere Figuren 21a und 21b). Im vorliegenden Fall weist die Rangierfeldvorrichtung zumindest zwei Befestigungselemente 128a, 132a auf. Die Befestigungselemente 128a, 132a sind zumindest im Wesentlichen identisch zueinander ausgebildet. Die Befestigungselemente 128a, 132a bestehen im vorliegenden Fall aus Metall. Die Befestigungselemente 128a, 132a sind zumindest im Wesentlichen rechteckig ausgebildet, insbesondere bei einer Betrachtung senkrecht zu einer Haupterstreckungsebene der Befestigungselemente 128a, 132a. Die Befestigungselemente 128a, 132a sind zumindest im Wesentlichen L-förmig ausgebildet. Eine lange Seite der L-Form bildet und/oder definiert jeweils einen Haltebereich und/oder Kabelführungsbereich der Befestigungselemente 128a, 132a. Ferner definiert eine kurze Seite der L-Form jeweils einen Trägerbefestigungsabschnitt der Befestigungselemente 128a, 132a. Die Trägerbefestigungsabschnitte können dabei auf eine an sich bekannte Art an der Trägereinheit befestigt werden. Die Befestigungselemente 128a, 132a sind im montierten Zustand im Bereich der Rückseite der Verbindungseinheit 10a angeordnet. Im montierten Zustand sind die Befestigungselemente 128a, 132a, insbesondere die lange Seite der L-Form, an den Seitenwänden 52a der Rahmeneinheit 16a befestigt. Die Befestigungselemente 128a, 132a sind dazu vorgesehen, die Verbindungseinheit 10a im Bereich der Rückseite zu stützen und insbesondere eine Gewichtskraft der Verbindungseinheit 10a zumindest teilweise auf die Trägereinheit zu übertragen. Im vorliegenden Fall sind die Befestigungselemente 128a, 132a dazu vorgesehen, ein rückseitiges Absacken der Verbindungseinheit 10a zu verhindern.

Darüber hinaus sind die Befestigungselemente 128a, 132a zumindest teilweise zu einer Kabelführung und/oder einer Aufnahme zumindest einer Kabelkomponente, wie beispielsweise den zuvor genannten Kabelkomponenten 106a, 110a vorgesehen. Dazu weisen die Befestigungselemente 128a, 132a zumindest ein Kabelbefestigungselement 130a und/oder zumindest eine, insbesondere standardisierte und/oder genormte, insbesondere quadratische, weitere Halteausnehmung 134a, insbesondere zur Verbindung mit einer der Komponentenhalterungen 108a, 112a, auf.

Die Befestigungselemente 128a, 132a sind dabei abhängig von einem Einsatzzweck der Verbindungsmodule 18a, 19a, abhängig von einem verwendeten Verbindungsmodul 18a, 19a und/oder abhängig von einer Höhe der Rahmeneinheit 16a aus einer Gruppe von Befestigungselementen 128a, 132a auswählbar. Die Figuren 21a und 21b zeigen dabei beispielhaft zwei verschiedene Typen von Befestigungselementen 128a, 132a. Die verschiedenen Typen von Befestigungselementen 128a, 132a sind dabei zumindest im Wesentlichen baugleich. Alternativ ist jedoch auch denkbar, auf, insbesondere zusätzliche, Befestigungselemente vollständig zu verzichten.

Zudem könnte grundsätzlich jedes Bauteil der Rangierfeldvorrichtung aus einem beliebigen anderen als dem zuvor offenbarten Material bestehen, wie beispielsweise zumindest teilweise, zu wenigstens einem Großteil und/oder vollständig, aus einem Kunststoff, einem Metall und/oder einem Verbundwerkstoff.

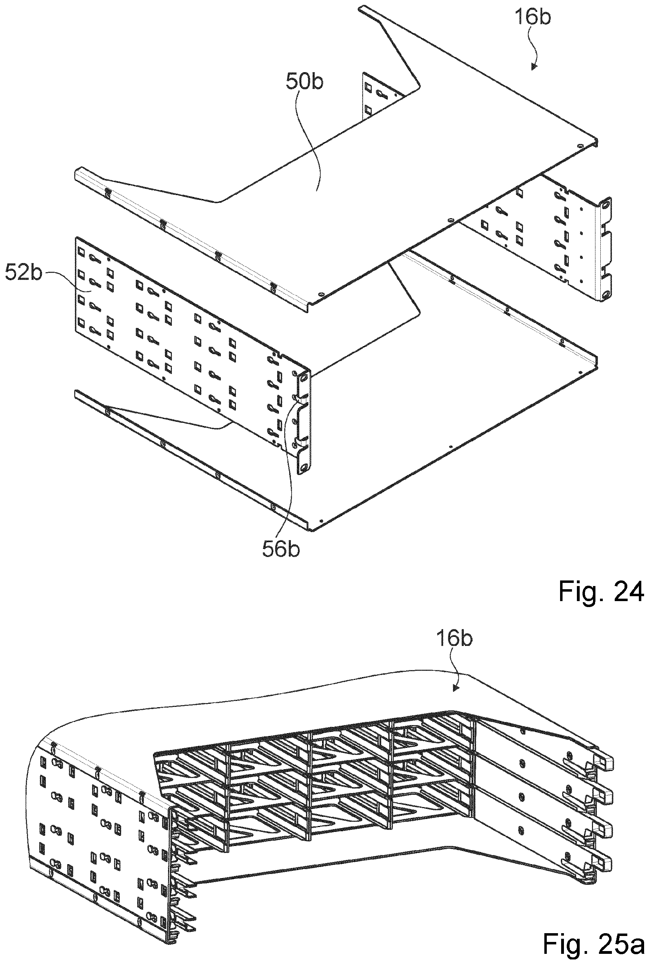

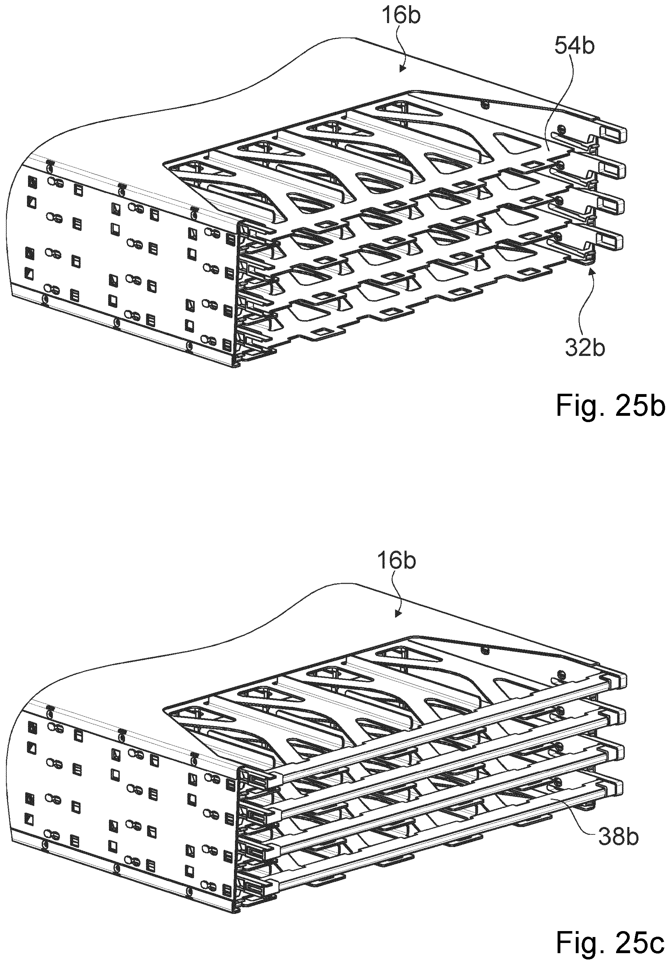

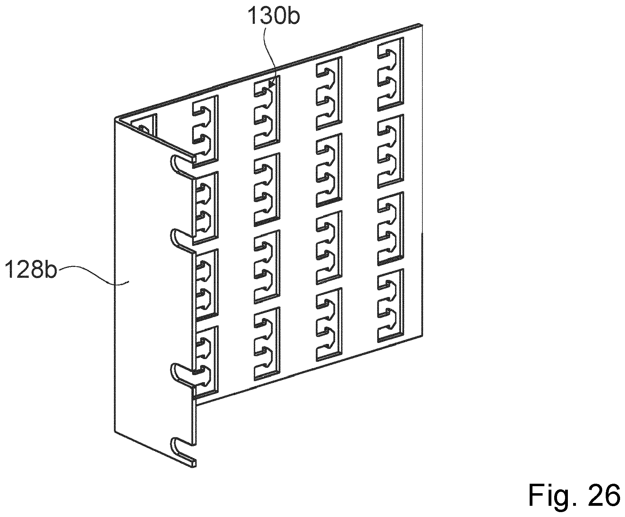

In den Figuren 22 bis 26 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1a bis 21b, verwiesen werden kann. Zur Unterscheidung der Ausführungsbeispiele ist der Buchstabe a den Bezugszeichen des Ausführungsbeispiels in den Figuren 1a bis 21b nachgestellt. In dem Ausführungsbeispiel der Figuren 22 bis 26 ist der Buchstabe a durch den Buchstaben b ersetzt.

Das weitere Ausführungsbeispiel der Figuren 22 bis 26 unterscheidet sich von dem vorherigen Ausführungsbeispiel zumindest im Wesentlichen durch eine Höhe einer Verbindungseinheit 10b.

Im vorliegenden Fall weist die Verbindungseinheit 10b eine Höhe von 3 · U und/oder 133,35 mm auf.

Seitenwände 52b einer Rahmeneinheit 16b sind dabei an die Höhe der Verbindungseinheit 10b angepasst. Zudem weist die Rahmeneinheit 16b in diesem Fall vier, insbesondere übereinander angeordnete, Halteplatten 54b auf. Die Halteplatten 54b entsprechen der Halteplatte 54a des vorherigen Ausführungsbeispiels.

Zudem entsprechen Verbindungsmodule 18b, 19b den Verbindungsmodulen 18a, 19a des vorherigen Ausführungsbeispiels.

Ferner weist die Verbindungseinheit 10b in diesem Fall vier, insbesondere übereinander angeordnete, Modulhalter 20b auf. Die Modulhalter 20b entsprechen dem Modulhalter 20a des vorherigen Ausführungsbeispiels.

Ein Schutzelement 24b ist an die Höhe der Verbindungseinheit 10b angepasst.

Ferner weist die Verbindungseinheit 10b in diesem Fall vier, insbesondere übereinander angeordnete, frontseitige Kabelmanagereinheiten 22b auf. Die frontseitigen Kabelmanagereinheiten 22b entsprechen der frontseitigen Kabelmanagereinheit 22a des vorherigen Ausführungsbeispiels.

Darüber hinaus kann die Verbindungseinheit 10b eine Vielzahl von rückseitigen Kabelmanagereinheiten 26b umfassen. Die rückseitigen Kabelmanagereinheiten 26b entsprechen den rückseitigen Kabelmanagereinheiten 26a des vorherigen Ausführungsbeispiels. Die rückseitigen Kabelmanagereinheiten 26b sind im vorliegenden Fall im montierten Zustand, insbesondere übereinander, auf den Halteplatten 54b gelagert und/oder fixiert.

Ferner weist die Verbindungseinheit 10b in diesem Fall jeweils vier, insbesondere übereinander angeordnete, erste Funktionseinheitenaufnahmebereiche 30b und zweite Funktionseinheitenaufnahmebereiche 32b auf. Die Funktionseinheitenaufnahmebereiche 30b, 32b entsprechen den Funktionseinheitenaufnahmebereichen 30a, 32a des vorherigen Ausführungsbeispiels.

Weiterhin kann die Verbindungseinheit 10b eine Vielzahl von Funktionseinheiten 34b, 36b, 38b umfassen. Die Funktionseinheiten 34b, 36b, 38b entsprechen den Funktionseinheiten 34a, 36a, 38a des vorherigen Ausführungsbeispiels. Die Funktionseinheiten 34b, 36b, 38b sind im vorliegenden Fall im montierten Zustand, insbesondere übereinander, in den Funktionseinheitenaufnahmebereicheb 30b, 32b angeordnet.

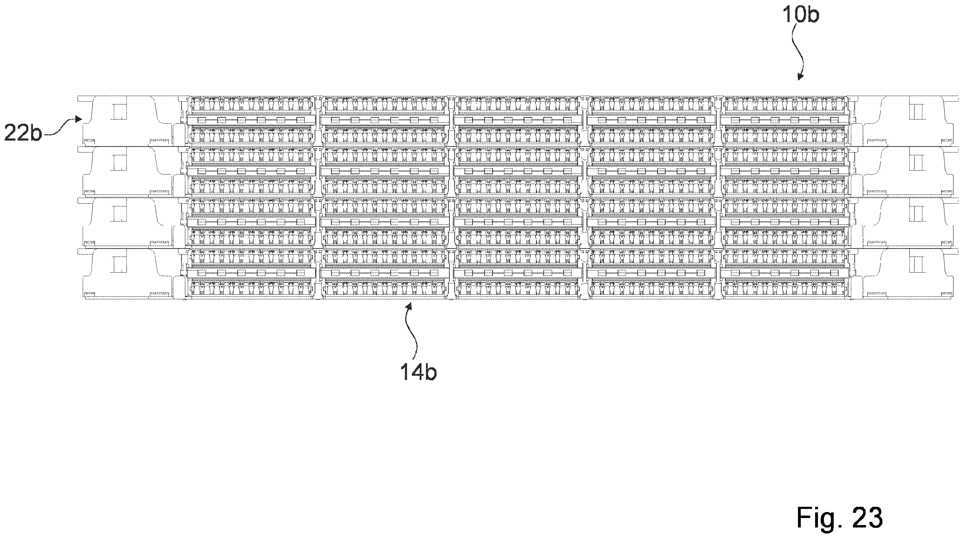

Figur 23 zeigt ein Blick auf die Frontseite der Verbindungseinheit 10b in einem voll bestückten Zustand. Dabei weist die Verbindungseinheit 10b genau vier Modulhalter 20b auf. Demnach ist die Verbindungseinheit 10b dazu vorgesehen, bis zu zwanzig der Verbindungsmodule 18b, 19b, gleichzeitig aufzunehmen. Die Verbindungseinheit 10b ist dazu vorgesehen, bis zu fünf der Verbindungsmodule 18b, 19b gleichzeitig nebeneinander und bis zu vier der Verbindungsmodule 18b, 19b gleichzeitig übereinander aufzunehmen. Insbesondere da die Höhe der Verbindungsmodule 18b, 19b im vorliegenden Fall 0,75 · U beträgt und eines der Verbindungsmodule 18b, 19b genau 18 Ports aufweist, weist die Verbindungseinheit 10b im vorliegenden Fall einen Verbindungsbereich 14b mit einer Höhe von 3 U und genau 360 Ports auf, was insbesondere einer Portdichte von 120 Ports/U entspricht. In diesem Fall kann somit auf eine zusätzliche Abdeckblende verzichtet werden.

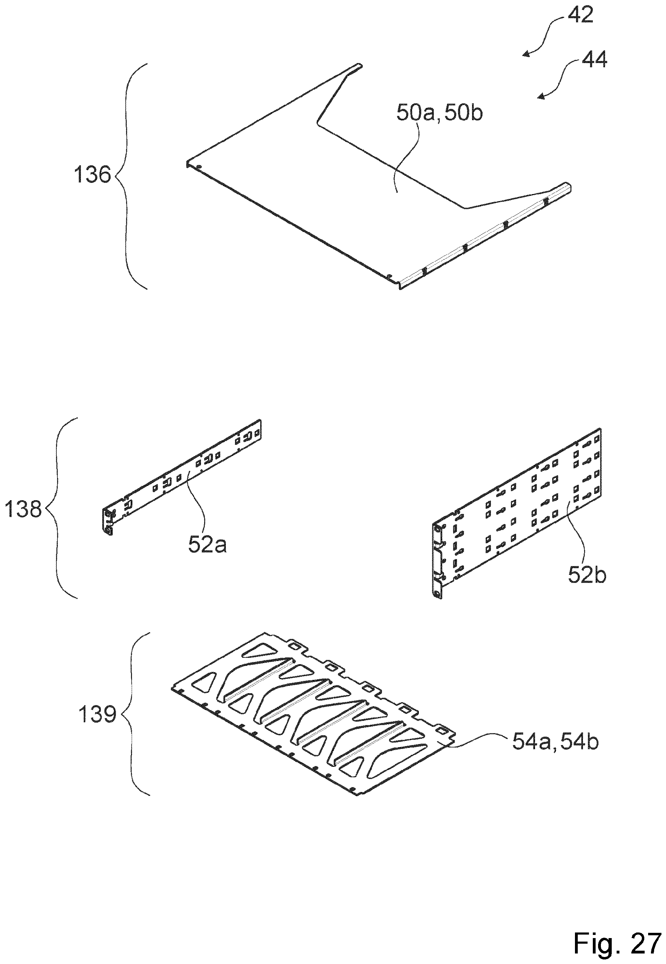

In den Figuren 27 bis 30 ist ein erfindungsgemäßes Baukastensystem 42 gezeigt. Das Baukastensystem 42 kann dabei sämtliche zuvor aufgeführte Bauteile umfassen.

Das Baukastensystem 42 umfasst einen ersten Baukasten 44 zur Herstellung der Rahmeneinheiten 16a, 16b (vgl. Figur 27). Der erste Baukasten 44 umfasst eine Gruppe 136 von Deckplatten 50a, 50b, eine Gruppe 138 von Seitenwänden 52a, 52b und eine Gruppe 139 von Halteplatten 54a, 54b. Die Gruppe 136 von Deckplatten 50a, 50b umfasst im vorliegenden Fall ein Element. Die Gruppe 138 von Seitenwänden 52a, 52b umfasst im vorliegenden Fall zwei Elemente. Die Gruppe 139 von Halteplatten 54a, 54b umfasst im vorliegenden Fall ein Element. Alternativ könnte jede Gruppe des ersten Baukastens eine andere Anzahl von Elementen aufweisen.

Das Baukastensystem 42 umfasst einen zweiten Baukasten 46 zur Herstellung der Verbindungsmodule 18a, 19a, 18b, 19b (vgl. Figur 28). Der zweite Baukasten 46 umfasst eine Gruppe 140 von Modulwänden 57a, 57b, eine Gruppe 142 von Moduldeckeln 58a, 58b, eine Gruppe 144 von frontseitigen Modulelementen 60a, 61a, 62a, 60b, 61b, 62b und eine Gruppe 146 von rückseitigen Modulelementen 64a, 66a, 64b, 66b. Die Gruppe 140 von Modulwänden 57a, 57b umfasst im vorliegenden Fall ein Element. Die Gruppe 142 von Moduldeckeln 58a, 58b umfasst im vorliegenden Fall ein Element. Die Gruppe 144 von frontseitigen Modulelementen 60a, 61a, 62a, 60b, 61b, 62b umfasst im vorliegenden Fall drei Elemente. Die Gruppe 146 von rückseitigen Modulelementen 64a, 66a, 64b, 66b umfasst im vorliegenden Fall zwei Elemente. Alternativ könnte jede Gruppe des zweiten Baukastens eine andere Anzahl von Elementen aufweisen.

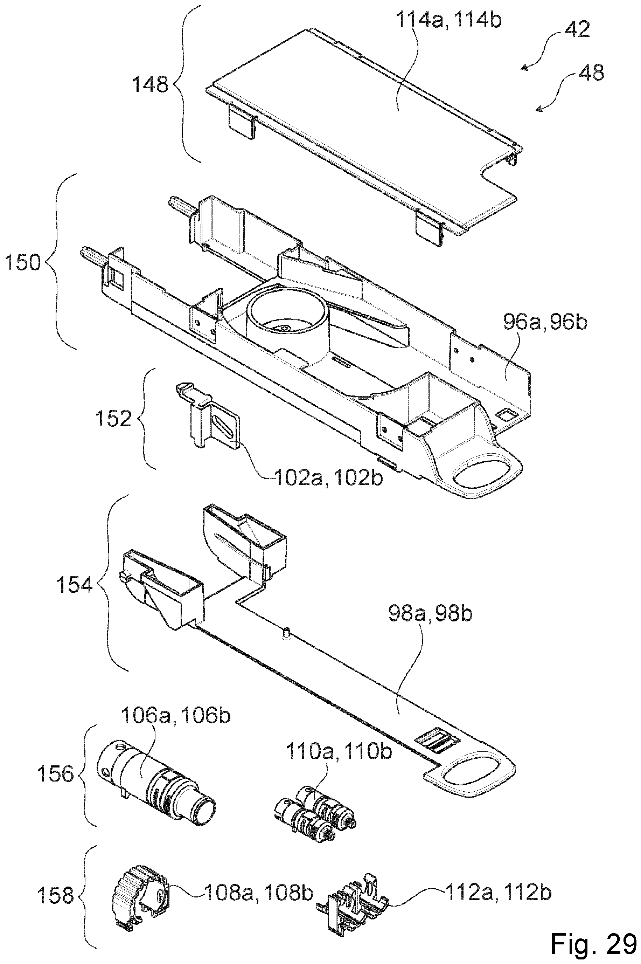

Das Baukastensystem 42 umfasst einen dritten Baukasten 48 zur Herstellung der rückseitigen Kabelmanagereinheiten 26a; 26b (vgl. Figur 29). Der dritte Baukasten 48 umfasst eine Gruppe 148 von Grundkörperabdeckungen 114a, 114b, eine Gruppe 150 von ersten Grundkörperteilen 96a, 96b, eine Gruppe 152 von zweiten Koppelelementen 102a, 102b, eine Gruppe 154 von zweiten Grundkörperteilen 98a, 98b, eine Gruppe 156 von Kabelkomponenten 106a, 110a, 106b, 110b und eine Gruppe 158 von Komponentenhalterungen 108a, 112a, 108b, 112b. Die Gruppe 148 von Grundkörperabdeckungen 114a, 114b umfasst im vorliegenden Fall ein Element. Die Gruppe 150 von ersten Grundkörperteilen 96a, 96b umfasst im vorliegenden Fall ein Element. Die Gruppe 152 von zweiten Koppelelementen 102a, 102b umfasst im vorliegenden Fall ein Element. Die Gruppe 154 von zweiten Grundkörperteilen 98a, 98b umfasst im vorliegenden Fall ein Element. Die Gruppe 156 von Kabelkomponenten 106a, 110a, 106b, 110b umfasst im vorliegenden Fall zwei Elemente. Die Gruppe 158 von Komponentenhalterungen 108a, 112a, 108b, 112b umfasst im vorliegenden Fall zwei Elemente. Alternativ könnte jede Gruppe des dritten Baukastens eine andere Anzahl von Elementen aufweisen.

Alternativ oder zusätzlich ist denkbar, dass ein Baukastensystem weitere Baukasten umfassen könnte, wie beispielsweise zumindest einen Baukasten zur Herstellung eines Modulhalters, einer frontseitigen Kabelmanagereinheit und/oder eines Schutzelements.

## Patentansprüche

1. Rangierfeldvorrichtung, insbesondere für Lichtwellenleiterkabel, mit zumindest einer Verbindungseinheit (10a; 10b), welche zumindest einen Port definiert, wobei die Verbindungseinheit (10a; 10b) in zumindest einem Verbindungsbereich (14a; 14b) eine Portdichte von zumindest 0,55 Ports/cm² aufweist, wobei die Verbindungseinheit (10a; 10b) zumindest ein Verbindungsmodul (18a, 19a; 18b, 19b), welches den zumindest einen Port bereitstellt, und zumindest eine rückseitige Kabelmanagereinheit (26a; 26b) aufweist, welche dazu vorgesehen ist, in zumindest einem Betriebszustand zumindest ein Kabel (12a) dem Verbindungsmodul (18a, 19a; 18b, 19b) zuzuführen.

2. Rangierfeldvorrichtung nach Anspruch 1, **dadurch gekennzeichnet, dass** die Verbindungseinheit (10a; 10b) als 19-Zoll-Einschub ausgebildet ist und der Verbindungsbereich (14a; 14b) eine Portdichte von zumindest 110 Ports/U aufweist.

3. Rangierfeldvorrichtung nach Anspruch 1 oder 2, **dadurch gekennzeichnet, dass** der Verbindungsbereich (14a; 14b) an einer Frontseite der Verbindungseinheit (10a; 10b) angeordnet ist.

4. Rangierfeldvorrichtung nach einem der vorhergehenden Ansprüche, **dadurch gekennzeichnet, dass** die Verbindungseinheit (10a; 10b) modular aufgebaut ist.

5. Rangierfeldvorrichtung nach Anspruch 4, **dadurch gekennzeichnet, dass** die Verbindungseinheit (10a; 10b) zumindest eine modular aufgebaute Rahmeneinheit (16a; 16b) aufweist.

6. Rangierfeldvorrichtung nach einem der vorhergehenden Ansprüche, **dadurch gekennzeichnet, dass** das Verbindungsmodul (18a, 19a; 18b, 19b) zumindest 9 Ports bereitstellt.

7. Rangierfeldvorrichtung nach einem der vorhergehenden Ansprüche, **dadurch gekennzeichnet, dass** das Verbindungsmodul (18a, 19a; 18b, 19b) eine Höhe von zumindest 1,78 cm und/oder höchstens 3,56 cm aufweist.

8. Rangierfeldvorrichtung nach einem der vorhergehenden Ansprüche, **dadurch gekennzeichnet, dass** das Verbindungsmodul (18a, 19a; 18b, 19b) einzeln und unabhängig von weiteren Verbindungsmodulen (18a, 19a; 18b, 19b) lösbar, verbindbar und/oder austauschbar ist.

9. Rangierfeldvorrichtung zumindest nach Anspruch 4, **dadurch gekennzeichnet, dass** das Verbindungsmodul (18a, 19a; 18b, 19b) modular aufgebaut ist.

10. Rangierfeldvorrichtung nach einem der vorhergehenden Ansprüche, **dadurch gekennzeichnet, dass** die Verbindungseinheit (10a; 10b) zumindest einen Modulhalter (20a; 20b) aufweist, welcher von wenigstens einer Aufbewahrungsposition in wenigstens eine Bearbeitungsposition und umgekehrt bewegbar und dazu vorgesehen ist, das Verbindungsmodul (18a, 19a; 18b, 19b) aufzunehmen.

11. Rangierfeldvorrichtung nach Anspruch 10, **dadurch gekennzeichnet, dass** das Verbindungsmodul (18a, 19a; 18b, 19b) zu einer Montage zumindest rückseitig in den Modulhalter (20a; 20b) einführbar und/oder zu einer Demontage zumindest rückseitig aus dem Modulhalter (20a; 20b) entfernbar ist.

12. Rangierfeldvorrichtung zumindest nach Anspruch 10, **dadurch gekennzeichnet, dass** die Verbindungseinheit (10a; 10b) zumindest ein Schutzelement (24a; 24b) aufweist, welches dazu vorgesehen ist, in zumindest einem Betriebszustand den Verbindungsbereich (14a; 14b) zumindest teilweise abzudecken, und welches mit dem Modulhalter (20a; 20b) verbunden ist.

13. Rangierfeldvorrichtung zumindest nach Anspruch 10, **dadurch gekennzeichnet, dass** die Verbindungseinheit (10a; 10b) zumindest eine frontseitige Kabelmanagereinheit (22a; 22b) aufweist, welche dazu vorgesehen ist, in zumindest einem Betriebszustand zumindest ein Kabel dem Verbindungsbereich (14a; 14b) zuzuführen, und welche mit dem Modulhalter (20a; 20b) verbunden ist.

14. Rangierfeldvorrichtung zumindest nach Anspruch 4, **dadurch gekennzeichnet, dass** die rückseitige Kabelmanagereinheit (26a; 26b) modular aufgebaut ist.

15. Rangierfeldvorrichtung nach einem der vorhergehenden Ansprüche, **dadurch gekennzeichnet, dass** die rückseitige Kabelmanagereinheit (26a; 26b) zu einer Montage und/oder Demontage des Verbindungsmoduls (18a, 19a; 18b, 19b) mit dem Verbindungsmodul (18a, 19a; 18b, 19b) koppelbar ist.

16. Rangierfeldvorrichtung nach einem der vorhergehenden Ansprüche, **dadurch gekennzeichnet, dass** die rückseitige Kabelmanagereinheit (26a; 26b) zumindest einen Kabelüberlängenaufnahmebereich (28a) definiert.

17. Rangierfeldvorrichtung nach einem der vorhergehenden Ansprüche, **dadurch gekennzeichnet, dass** die Verbindungseinheit (10a; 10b) zumindest einen Funktionseinheitenaufnahmebereich (30a, 32a; 30b, 32b) aufweist, welcher wenigstens einem Verbindungsmodul (18a, 19a; 18b, 19b) zugeordnet und zur Aufnahme wenigstens einer, von einem Verbindungsmodul (18a, 19a; 18b, 19b), einer frontseitigen Kabelmanagereinheit (22a; 22b), einer rückseitigen Kabelmanagereinheit (26a; 26b) und einem Schutzelement (24a; 24b) verschiedenen Funktionseinheit (34a, 36a, 38a; 34b, 36b, 38b) vorgesehen ist.

18. Rangierfeld (40a) mit zumindest einer Rangierfeldvorrichtung nach einem der vorhergehenden Ansprüche.

19. Baukastensystem (42) zur Herstellung einer Rangierfeldvorrichtung, insbesondere nach einem der Ansprüche 1 bis 17, mit zumindest einem Baukasten (44, 46, 48), welcher ein Baukasten zur Herstellung einer Rahmeneinheit (16a; 16b), eines Verbindungsmoduls (18a, 19a; 18b, 19b), eines Modulhalters (20a; 20b), einer frontseitigen Kabelmanagereinheit (22a; 22b), eines Schutzelements (24a; 24b), einer rückseitigen Kabelmanagereinheit (26a; 26b) und/oder einer dem Verbindungsmodul (18a, 19a; 18b, 19b) zugeordneten Funktionseinheit (34a, 36a, 38a; 34b, 36b, 38b) ist.
